(19) Europäisches Patentamt
European Patent Office
Office européen des brevets

(11) Publication number: **0 462 243 B1**

# (12) EUROPEAN PATENT SPECIFICATION

(45) Date of publication of patent specification: **13.09.95**

(51) Int. Cl.$^{6}$: **C09K 19/30**, C09K 19/42, G02F 1/137

(21) Application number: **91901290.6**

(22) Date of filing: **28.12.90**

(86) International application number: **PCT/EP90/02323**

(87) International publication number: **WO 91/10716 (25.07.91 91/17)**

## (54) MATRIX LIQUID CRYSTAL DISPLAY.

(30) Priority: **10.01.90 EP 90100403**

(43) Date of publication of application: **27.12.91 Bulletin 91/52**

(45) Publication of the grant of the patent: **13.09.95 Bulletin 95/37**

(84) Designated Contracting States: **DE FR GB IT NL**

(56) References cited:
**EP-A- 0 022 183**
**EP-A- 0 365 962**
**WO-A-87/06602**

**Mol. Cryst. Liq. Cryst., vol. 167, 1989, Gordon and Breach Science Publishers S.A., (US), J.C. Liang et al.: "The synthesis and liquid crystal behavior of p-Benzotrifluoride Compounds III", pages 199-206**

(73) Proprietor: **MERCK PATENT GmbH**
**Postfach,**
**Frankfurter Strasse 250**
**D-64271 Darmstadt (DE)**

(72) Inventor: **PLACH, Herbert**
**Wingertsbergstr. 5**
**D-6100 Darmstadt (DE)**
Inventor: **WEBER, Georg**
**Wilhelm-Lueschner-Str. 38**
**D-6106 Erzhausen (DE)**
Inventor: **HITTICH, Reinhard**
**Am Kirchberg 1**
**D-6101 Modautal 1 (DE)**
Inventor: **KURMEIER, Hans-Adolf**
**Hinter der Schule 3a**
**D-6104 Seeheim-Jugenheim (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The invention concerns a matrix liquid crystal display containing

- two plane parallel support plates which together with a frame form a cell,
- integrated non-linear elements for switching individual picture elements on the support plates and
- nematic liquid crystal mixture which is present in the cell, has a positive dielectric anisotropy, a high specific resistivity, a nematic phase range of at least 60 °C, a maximum viscosity at 20 °C of 30 mPa.s and a mean dielectricity constant $\bar{\epsilon} \leq 8$,

and comprises

a) at least 10 % by weight of a liquid-crystalline component B comprising one or more compounds having a dielectric anisotropy of more than +1.5, selected from the group consisting of compounds of the formula IIa to IIf:

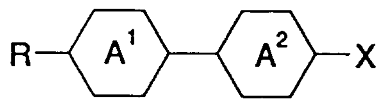

IIa

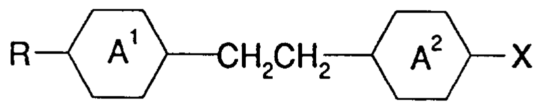

IIb

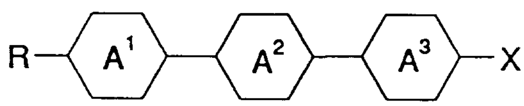

IIc

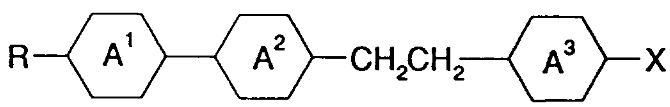

IId

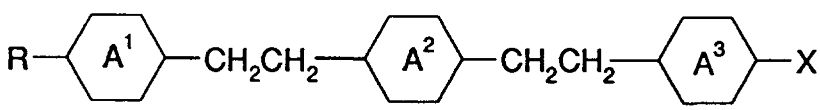

IIe

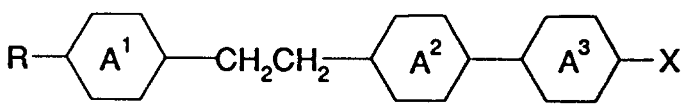

IIf

in which

| | |
|---|---|
| R | is n-alkyl or n-alkenyl of up to 9 carbon atoms, |
| X | is cyano, -NCS, F, Cl, -CHF2, $-OCF_3$, $-OCHF_2$, $-OCF_2CF_2H$ or $-OC_2F_5$, and |
| the rings $A^1$, $A^2$ and $A^3$ | are each, independently of one another, 1,4-phenylene, 2- or 3-fluoro-1,4-phenylene, 2,3-difluoro-1,4-phenylene, 2,6-difluoro-1,4-phenylene, trans-1,4-cyclohexylene or 1,4-cyclohexenylene. |

b) up to 90 % by weight of a liquid-crystalline component A comprising one or more compounds having a dielectric anisotropy of -1.5 to +1.5 of the general formula I

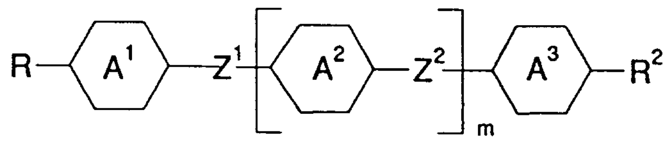

I

in which

| | |
|---|---|
| $R^1$ and $R^2$ | are each, independently of one another, n-alkyl, -fluoroalkyl or n-alkenyl having up to 9 carbon atoms, |
| the rings $A^1$, $A^2$ and $A^3$ | are each, independently of one another, 1,4-phenylene, 2- or 3-fluoro-1,4-phenylene, trans-1,4cyclohexylene or 1,4-cyclohexenylene, |
| $Z^1$ and $Z^2$ | are each, independently of one another, $-CH_2CH_2$ or a single bond, and |
| m | is 0, 1 or 2, and $A^2$ and $Z^2$ are each identical or different if m = 2, and |

c) 0 to 20 % by weight of a liquid-crystalline component C comprising one or more compounds having a dielectric anisotropy of less than - 1.5,

characterized in that the liquid crystal mixture comprises one or more compounds selected from the group consisting of 1a to 1g:

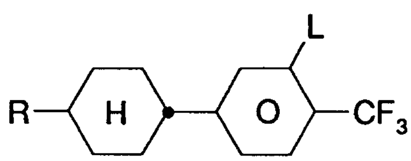

1a

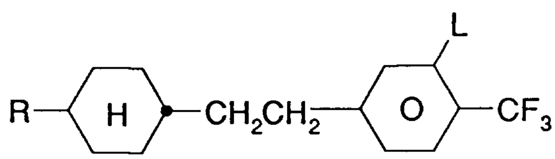

1b

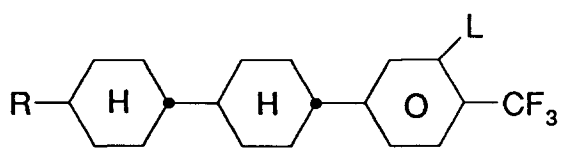

1c

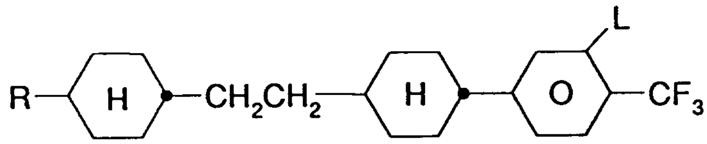

1d

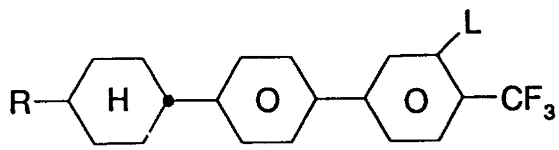

1e

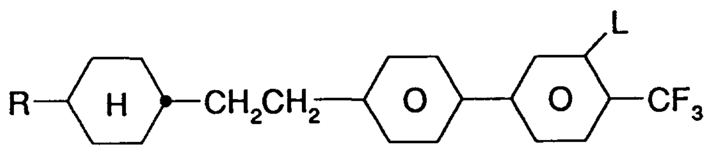

1f

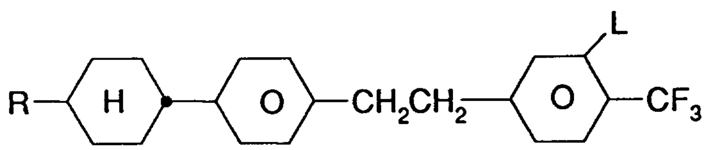

1g

wherein R denotes n-alkyl, n-oxaalkyl or n-alkenyl with up to 9 carbon atoms, and L is H or F, preferably H.

Matrix liquid crystal displays (MLC displays) according to the preamble are known. For example, active elements (diodes or transistors) can be used as non-linear elements for the individual switching of the individual picture elements. This is referred to as an "active maxtrix", in which two types can be distinguished:

1. MOS (metal oxide semiconductor) transistors on a silicon wafer as the substrate.
2. Thin film transistors (TFT) on a glass plate as the substrate.

In the case of type 1, dynamic scattering or the guest/ host effect is usually used as the electrooptical effect. The use of single-crystal silicon as the substrate material limits the size of the display, since, even if different partial displays are put together in the form of modules, difficulties arise at the joints.

In the case of the more promising type 2, which is preferred, the TN effect is usually used as the electrooptical effect. Two technologies are distinguished: TFTs consisting of compound semiconductors, such as, for example, CdSe, or TFTs based on polycrystalline or amorphous silicon. The latter technology is the subject of intense development work worldwide.

The TFT matrix is disposed on the inside surface of one of the glass plates of the display, while the other glass plate carries the transparent counter electrode on its inside surface. Compared with the size of the picture element electrode, the TFT is very small and essentially does not interfere with the picture. This technology can also be extended to picture displays in fully satisfactory colours by arranging a mosaic of red, green and blue filters in such a manner that each filter element is opposite to a switchable picture element.

The TFT displays usually operate as TN cells which contain crossed polarizers in transmission and are illuminated from behind.

The term MLC displays in this context comprises each matrix display which has integrated non-linear elements, i.e. apart from the active maxtrix also displays which contain passive elements such as varistors or diodes (MIM = metal/insulator/metal).

MLC displays of this type are in particular suitable for TV applications (e.g. portable TVs) or for highly informative displays in automobile and aircraft construction. In addition to problems regarding the angle dependency of the contrast and the switching times, difficulties in MLC displays arise from the insufficient resistivity of the liquid crystal mixtures (Togashi, S., Sekiguchi, K., Tanabe, H. Yamamoto, E., Sorimachi, K., Tajima, E., Watanabe, H. Shimizu, H., Proc. Eurodisplay 84, Sept. 1984: A 210-288 Matrix LCD Controlled by Double Stage Diode Rings, p. 141 ff., Paris; Stromer, M., Proc. Eurodisplay 84, Sept. 1984: Design of

Thin Film Transistors for Matrix Addressing of Television Liquid Crystal Displays, p. 145 ff ., Paris). With decreasing resistivity, the contrast of an MLC display deteriorates. Since the resistivity of the liquid crystal mixture usually decreases by interaction with the inside surfaces of the displays over the lifetime of an MLC display, a high (initial) resistance is very important for achieving acceptable service lives.

Therefore, there is still a high demand for MLC displays which have very high resistivity in combination with a large range of operating temperature, short switching times and low threshold voltage.

To provide a good contrast over a wide viewing angle, operation of the MLC displays in the first minimum of transmission is preferred. These MLC are very well suited for TV applications and consequently are of high commercial interest. For these applications some physical properties of the liquid crystals become more important than for passive TN displays. Some of the decisive properties for the performance of an MLC are the resistivity and the storability of the liquid crystal.

In a MLC display the non-linear switching elements are addressed in a multiplex scheme. So they charge the electrodes of a pixel in the limited time they are active. Then-they become inactive until they are addressed again in the next cycle. Consequently the change of the voltage of an activated (charged) pixel is determined by two factors. They are the capacity of the electrodes of the pixel and the resitivity of the dielectric material between the electrodes, namely the liquid crystal. The characteristic time constant of the decay of the voltage at a pixel, the RC time, has to be significantly bigger than the time between two addressing cycles ($t_{adr.}$). A parameter frequently used to describe the performance of an MLC is the voltage holding ratio HR of a picture element. As the voltage at a pixel decays exponentially an increase of the holding ratio necessitates liquid crystal materials with exceptionally high resistivities.

There are several points of importance for the resistivity of the liquid crystal inside a display, e.g. the orientation layers used and the curing conditions of the orientation material. But by no means less important are the electrical properties of the liquid crystal used. Especially the resistivity of the liquid crystal in the display determines the magnituted of the voltage drop at the pixel. This resistivitiy usually can not be higher than the bulk resistivity of the liquid crystal material.

In an actual MLC display the driving voltage at a pixel is not applied as single pulses, changing the electrodes only once, but as a continuous waveform with a frequency of 60 Hz. So the free decay of the voltage at a pixel characterized by the RC time is not necessarily determining the performance of the display. Especially the occurrence of a multiexponential decay of the voltage may lead to deviations. The property directly correlated to the performance of MLC displays is the ratio ot the actual voltages at the individual pixel directly after one addressing pulse and directly before the next addressing pulse. The holding ratio can be determined by simultaneous monitoring of the RMS values of the driving voltage applied to the TFT and the acutal voltage at the electrodes of the picture element.

The object of the invention is to provide MLC displays which do not or only to a small extent have the above disadvantages and, at the same time, have very high resistivities.

It has now been found that this object can be achieved by using nematic liquid crystal mixtures in these display elements, which contain one or more compounds selected from the above mentioned group consisting of 1a to 1g.

It has been found that already a relatively low percentage of compounds selected from the group consisting of 1a to 1g (e.g. 5 % (preferably 10 %) or more) allows to realize improved MLC displays. In addition, the corresponding mixtures show an improved low temperature behaviour, e.g. very low viscosity at -30° and low temperature for the transition smectic-nematic.

Accordingly, the invention relates to an MLC display containing

- two plane parallel support plates which together with a frame form a cell,
- integrated non-linear elements for switching individual picture elements on the support plates and
- nematic liquid crystal mixture which is present in the cell, has a positive dielectric anisotropy, a high specific resistivity, a nematic phase range of at least 60 °C, a maximum viscosity at 20 °C of 30 mPa.s and a mean dielectricity constant $\bar{\epsilon} \leq 8$,

and comprises

a) at least 10 % by weight of a liquid-crystalline <u>component B</u> comprising one or more compounds having a dielectric anisotropy of more than +1.5, selected from the group consisting of compounds of the formula IIa to IIf:

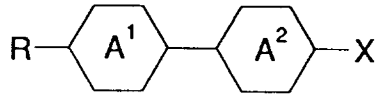

IIa

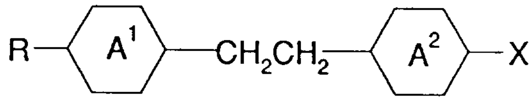

IIb

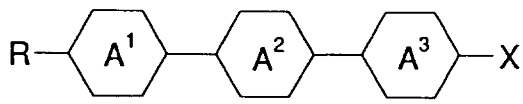

IIc

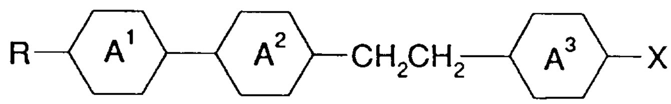

IId

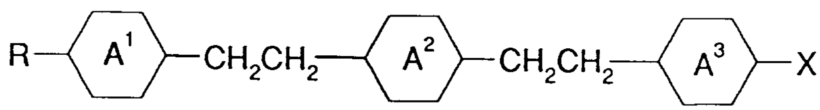

IIe

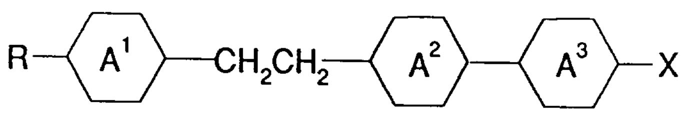

IIf

in which

| | |
|---|---|
| R | is n-alkyl or n-alkenyl of up to 9 carbon atoms, |
| X | is cyano, -NCS, F, Cl, -CHF2, $-OCF_3$, $-OCHF_2$, $-OCF_2CF_2H$ or $-OC_2F_5$, and |
| the rings $A^1$, $A^2$ and $A^3$ | are each, independently of one another, 1,4-phenylene, 2- or 3-fluoro-1,4-phenylene, 2,3-difluoro-1,4-phenylene, 2,6-difluoro-1,4-phenylene, trans-1,4-cyclohexylene or 1,4-cyclohexenylene. |

b) up to 90 % by weight of a liquid-crystalline component A comprising one or more compounds having a dielectric anisotropy of -1.5 to +1.5 of the general formula I

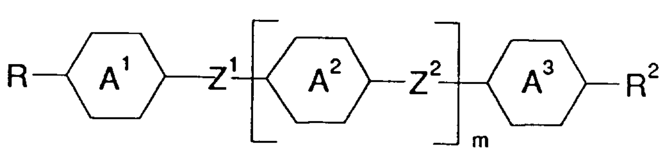

I

in which

| | |
|---|---|
| $R^1$ and $R^2$ | are each, independently of one another, n-alkyl, -fluoroalkyl or n-alkenyl having up to 9 carbon atoms, |
| the rings $A^1$, $A^2$ and $A^3$ | are each, independently of one another, 1,4-phenylene, 2- or 3-fluoro-1,4-phenylene, trans-1,4cyclohexylene or 1,4-cyclohexenylene, |
| $Z^1$ and $Z^2$ | are each, independently of one another, $-CH_2CH_2$ or a single bond, and |
| m | is 0, 1 or 2, and $A^2$ and $Z^2$ are each identical or different if m = 2, and |

c) 0 to 20 % by weight of a liquid-crystalline component C comprising one or more compounds having a dielectric anisotropy of less than - 1.5,

characterized in that the liquid crystal mixture comprises one or more compounds selected from the group consisting of 1a to 1g:

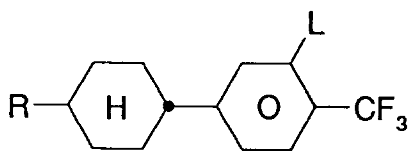

1a

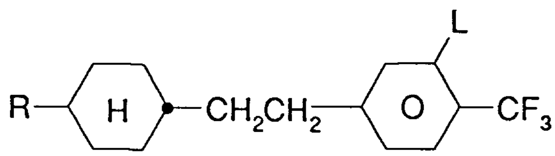

1b

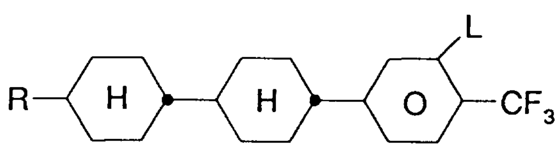

1c

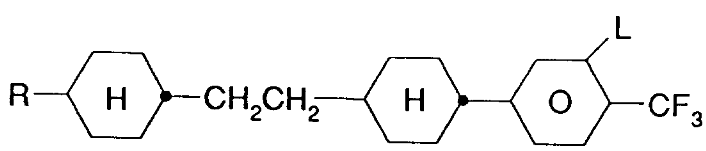

1d

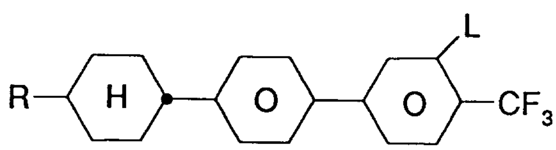

1e

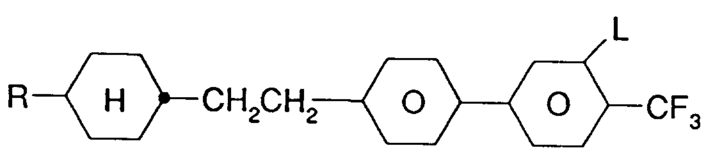

1f

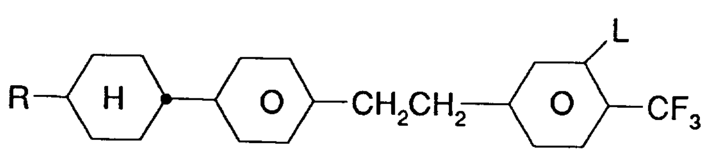

1g

wherein R denotes n-alkyl, n-oxaalkyl or n-alkenyl with up to 9 carbon atoms, and L is H or F, preferably H.

The invention also relates to the corresponding liquid crystal mixtures, in particular for use in MLC displays. However, the mixtures are also suitable for many other applications, such as, for example, TN, STN or OMI.

Nematic liquid crystal mixtures which instead of the compounds of the formulae 1a to 1g contain analogous cyano compounds are known and commercially utilized in various designs. However, these

liquide crystal mixtures are ditinguished by values for the resistivity which are too low and are often between $5x10^9$ and $1.1x10^{11}$ Ωcm or less at 20°. The corresponding MLC displays have values for the resistivity which are too low for some commercial applications.

The resistivity of liquid crystal mixtures is in general high, if the dielectric anisotropy is small, since the polar components which are present in mixtures which have a high De have a stabilizing effect on ions and thus lead to high conductivity or low resistance. Surprisingly, it has now been found that the resistivity is particularly high, if the mean dielectricity constant $\bar{\epsilon}$ [= $1/3(2\,\epsilon_{\perp} + \epsilon_{11})$] is small and, at the same time, the dielectrically positive ($\Delta\epsilon \geqq 1.5$) component B contains in addition to compounds which have a terminal cyano or even instead of those cyano compounds one or more compounds selected from the group consisting of 1a to 1g. Component B may also contain compounds which have a terminal -NCS, F, Cl, $-CHF_2$, $-OCF_3$, $-OCHF_2$, $-OCF_2CF_2H$ or $-OC_2F_5$.

The following preferred embodiments are of particular importance:

- Component B essentially consists of one or more compounds selected from the group consisting of 1a to 1g and nitrile-containing compounds of formulae IIa to IIf, wherein X is CN.
- Component B contains compounds of the formulae IIa to IIf in which X is -NCS, F, Cl, $-CHF_2$, $-OCF_3$, $-OCHF_2$, $-OCF_2CF_2H$ or $-OC_2F_5$ and the amount of cyano compounds in component B is 0 to 50 % by weight.
- Component B does not contain any compounds of the formulae IIa to IIf in which X is cyano.
- X is F, Cl, $-OCF_3$, $-OCHF_2$ or $-CHF_2$.
- Component A contains one or more compounds selected from the group consisting of II1 to II7:

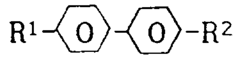

II1

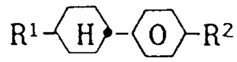

II2

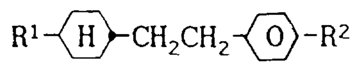

II3

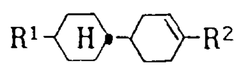

II4

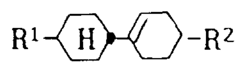

II5

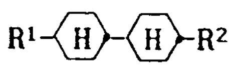

II6

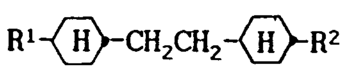

II7

in which $R^1$ and $R^2$ have the meaning given in Claim 2.

- Component A contains one or more compounds selected from the group consisting of II8 to II20:

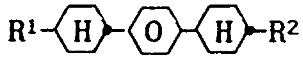

II8

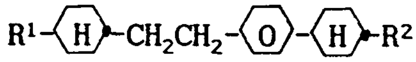

II9

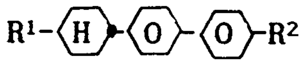

II10

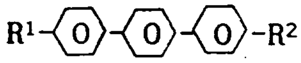

II11

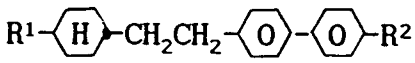

II12

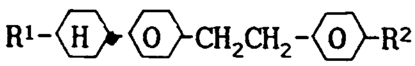

II13

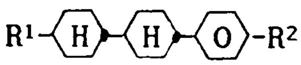

II14

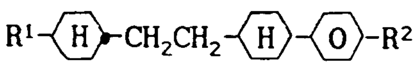

II15

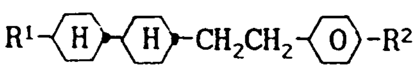

II16

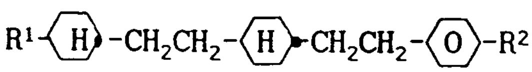

II17

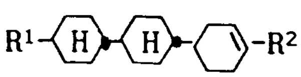

II18

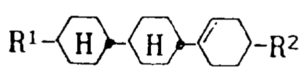

II19

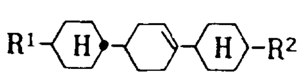

II20

in which $R^1$ and $R^2$ have the meaning given in Claim 2 and the 1,4-phenylene groups in II8 to II17 can each, independently of one another, also be mono- or polysubstituted by fluorine.

- Component A contains of one or more compounds selected from the group consisting of II21 to II25:

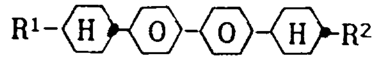

II21

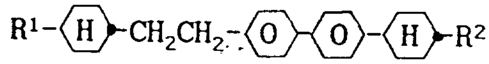

II22

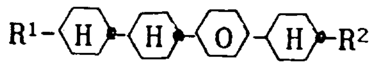

II23

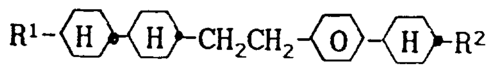

II24

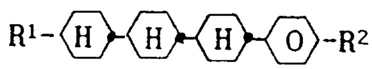

II25

in which $R^1$ and $R^2$ have the meaning given in Claim 2 and the 1,4-phenylene groups in II21 to II25 can each, independently of one another, also be mono- or polysubstituted by fluorine.

- Component A contains one or more compounds selected from the group consisting of II26 to II27:

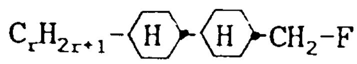

II26

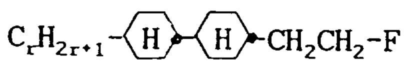

II27

in which $C_rH_{2r+1}$ is a straight-chain alkyl group of up to 7 carbon atoms.

- The liquid crystal mixture optionally contains one or more compounds selected from the group consisting of III, IV and IVa:

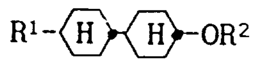

III

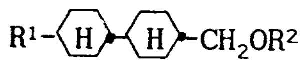

IV

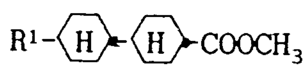

IVa

in which $R^1$ and $R^2$ have the meaning given in Claim 2.

- The liquid crystal mixture optionally contains one or more compounds of the formula

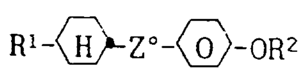

in which

$R^1$ and $R^2$ have the meaning given in Claim 2, and

Z° is a single bond, $-CH_2CH_2-$,

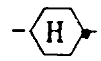 or

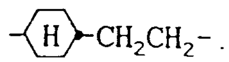

- The liquid crystal mixture optionally contains one or more compounds selected from the group consisting of V and VI:

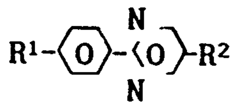 V

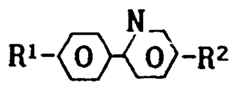 VI

in which $R^1$ and $R^2$ have the meaning given in Claim 2.

- The liquid crystal mixture optionally contains one or more compounds selected from the group consisting of VII to XIII:

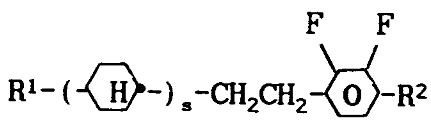 VII

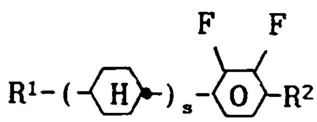 VIII

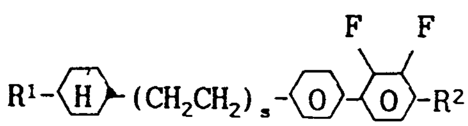 IX

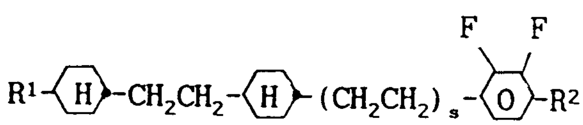 X

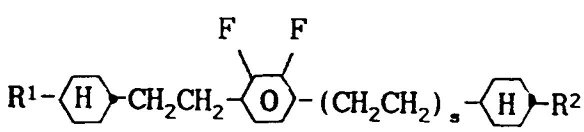 XI

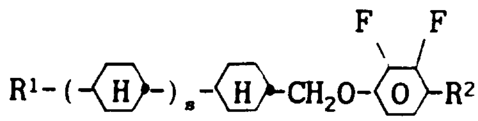

XII

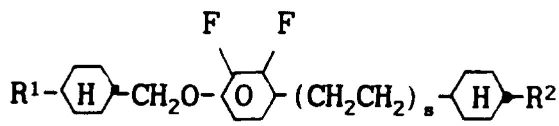

XIII

in which

$R^1$ and $R^2$ have the meaning given in Claim 2, and

s is 0 or 1.

Particular preference is given to liquid crystal mixtures which contain nitrile-containing and nitrile-free, halogenated compounds, the latter preferably conforming to the formulae IIa to IIf in which X is F, Cl, $-CHF_2$, $-OCF_3$, $-OCHF_2$, $-OCF_2CF_2H$ or $-OC_2F_5$.

The ratio of nitrile-free to nitrile-containing compounds in component B is preferably > 1:1, in particular > 2:1. Particularly preferred ranges are 2.5:1 to 6:1. The nitrile-free compounds are preferably those of the formulae 1a to 1g and IIa to IIf in which X is different from CN.

However, very particular preference is given to liquid crystal mixtures whose component B essentially consists of nitrile-free, halogenated compounds. Preferably, the above mentioned preferred compounds of the formulae 1a to 1g are used alone or together with those of the formulae IIa to IIf.

The mixtures according to the invention may also contain one or more compound with high optical anisotropy, for example compounds selected from the following group:

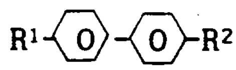

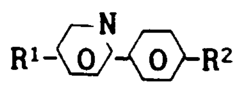

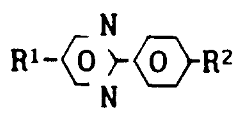

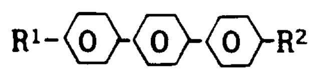

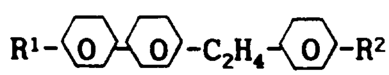

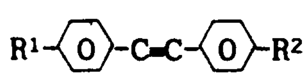

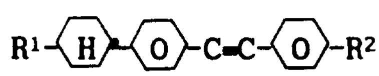

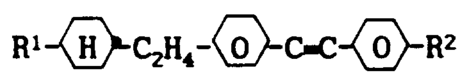

wherein $R^1$ and $R^2$ have the meaning given above and one of the the 1,4-phenylene rings in each molecule may also be laterally substituted by fluorine.

The residues R, $R^1$ and $R^2$ have the following preferred meanings.

If $R^1$, $R^2$ and/or R are an alkyl or oxaalkyl radical these radicals are straight-chained. Preferably, it has 2, 3, 4, 5, 6 or 7 C atoms and is accordingly perferably ethyl, propyl, butyl, pentyl, hexyl or heptyl.

Oxaalkyl is preferably straight chain 2-oxapropyl (= methoxymethyl), 2- (= ethoxymethyl) or 3-oxabutyl (= 2 methoxyethyl), 2-, 3- oder 4-oxapentyl, 2-, 3-, 4- or 5-oxahexyl, 2-, 3-, 4-, 5- or 6-oxaheptyl, 1,3-dioxabutyl (= methoxymethoxy), 1,3-, 1,4-, 2,4-dioxapentyl, 1,3-, 1,4-, 1,5-, 2,4-, 2,5- or 3,5-dioxahexyl, 1,3-, 1,4-, 1,5-, 1,6-, 2,4-, 2,5-, 2,6-, 3,5-, 3,6- or 4,6-dioxaheptyl.

If $R^1$, $R^2$ and/or R are an alkenyl radical, it is straight-chained and has preferably 2 to 7 C atoms. Accordingly, it is vinyl, prop-1-, or prop-2-enyl, but-1-, 2- or but-3-enyl, pent-1-, 2-, 3- or pent-4-enyl, hex-1-, 2-, 3-, 4- or hex-5-enyl, hept-1-, 2-, 3-, 4-, 5- or hept-6-enyl.

If $R^1$ and/or $R^2$ are a -fluoralkyl radical, it is straight-chained and has preferably 1 to 7 C atoms. Accordingly, it is fluoromethyl, 2-fluoroethyl, 3-fluoropropyl, 4-fluorobutyl, 5-fluoropentyl, 6-fluorohexyl or 7-fluoroheptyl.

"Essentially" is understood to mean that the amount of further compounds in the corresponding component is $\leqq$ 20 %, in particular $\leqq$ 10 %.

Preference is also given to liquid crystal mixtures whose component B contains compounds whose end groups are chlorinated. Compounds of this type are known to one skilled in the art and preferably conform to the formulae IIa to IIf where X is Cl. In a particularly preferred embodiment, the mixtures contain one or more compounds of the formula IIa to IIf in which $A^2$-X or $A^3$-X is

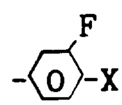

where X is $CF_3$, -$OCF_3$-, $OCHF_2$ or Cl or wherein $A^2$-X or $A^3$-X is

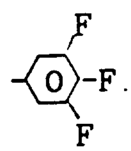

Furthermore, component B can also contain tetranuclear compounds, for example in accordance with formulae IIc to IIf in which one of the rings $A^1$ to $A^3$ is present twice.

In a particularly preferred embodiment, the mixtures contain compounds which have a terminal nitrile and are present in component B in an amount from 0 to 50 % by weight. Particular preference is given to mixtures which do not contain any compounds which have a terminal nitrile. Suprisingly, it has been found that groups such as -$OCF_3$, -$OCHF_2$, -$OCF_2CF_2H$ or -$OC_2F_5$ have a considerably less stabilizing effect on ions in the displays than -$OCH_3$ or -$OC_2H_5$. The same is true for aliphatically bound alkoxy (compounds of the formulae III and IV).

The mixtures according to the invention preferably have a resistivity of $\geqq 10^{12}$ Ω x cm, particularly preferably > $10^{13}$ Ω x cm, at 20°. The mean $\epsilon$ is preferably $\leqq$ 7, in particular $\leqq$ 5.

The values of dielectric anisotropy of the individual compounds of components A to C are determined at 20° by extrapolation from a polar mixture (containing 24 % of p-trans-4-propylcyclohexylbenzonitrile, 36 % of p-trans-4-pentylcyclohexylbenzonitrile, 25 % of p-trans-4-heptylcyclohexylbenzonitrile and 15 % of 4-cyano-4'-(trans-4-pentylcyclohexyl)biphenyl), if the compound to be determined contains a dipole along the longitudinal axis of the molecule, or from a neutral mixture (containing 22 % of trans-1-p-ethylphenyl-4-propylcyclohexane, 20 % of trans-1-p-methoxyphenyl-1-propylcyclohexane, 15 % of trans-1-p-ethoxyphenyl-4-propylcyclohexane, 19 % of 4-ethyl-4-(trans-4-propylcyclohexyl)biphenyl, 14 % of 4-ethyl-4'-(trans-4-pentylcyclohexyl)biphenyl, 5 % of 4,4'-bis(trans-4-propylcyclohexyl)biphenyl and 5 % of 4-(trans-4-pentylcyclohexyl)-4'-(trans-4-propylcyclohexyl)biphenyl) in the case of neutral compounds.

The liquid crystal mixtures according to the invention make it possible to achieve a high value for the resistivitiy in combination with low viscosities, which allows to produce excellent MLC displays. The MLC displays according to the invention preferably operate in the first transmission minimum according to Gooch

and Tarry [C.H. Gooch and H.A. Tarry, Electron. Lett. 10, 2-4, 1974; C.H. Gooch and H.A. Tarry, Appl. Phys., Vol. 8, 1575-1584, 1975], in which case in addition to particularly favourable elctrooptical properties such as, for example, high steepness of the characteristic curve and low angle dependence of the contrast (German Patent Specification 3,022,818) in combination with the same threshold voltage as in analogous display, a smaller dielectric anisotropy is sufficient in the second minimum. This makes it possible to achieve significantly higher resistivities in the first minimum, when the mixtures according to the invention are used.

The viscositiy at 20 °C is peferably 25 mPa.s. The nematic phase range is preferably at least 70°, in particular at least 80°. Preferably, this range extends at least from -20° to +70°.

The individual compounds of the formulae 1a to 1g and I to IV and their subformulae which can be used in the MLC displays according to the invention are either known or can be prepared analogously to known compounds.

If component B is not composed predominantly of strongly dielectrically positive nitrile components but predominantly only of weakly dielectrically positive compounds such as, for example, the halogenated compounds mentioned below, component A can be omitted entirely, and the mixtures according to the invention can in this special embodiment be solely based on component B and, if desired, component C.

The rings $A^1$, $A^2$ and $A^3$ are each preferably, independently of one another, trans-1,4-cyclohexylene or 1,4-phenylene. In a preferred embodiment, one of the rings $A^1$, $A^2$ and $A^3$ is 2- or 3-fluoro-1,4-phenylene, 2,3-difluoro-1,4-phenylene or 2,6-difluoro-1,4-phenylene. The ring bound to X (i.e. $A^2$ in IIa and IIb and $A^3$ in IIc to IIf) is preferably 1,4-phenylene which is unsubstituted or even mono- or disubstituted by fluorine. $A^2$-X and $A^3$-X are preferably a group selected from the formulae (a) to (i):

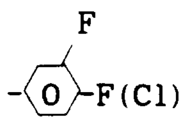

(a)

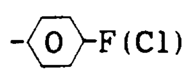

(b)

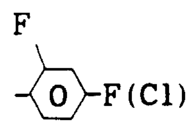

(c)

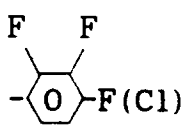

(d)

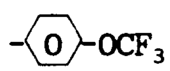

(e)

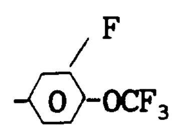

(f)

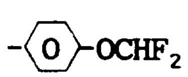

(g)

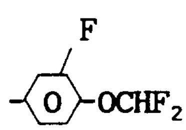

(h)

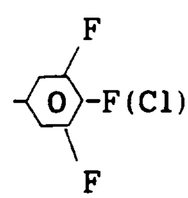

(i)

of which (a), (b), (d), (e), (g), (h) and (i) are particularly preferred.

Particularly preferred smaller groups of compounds are listed below:

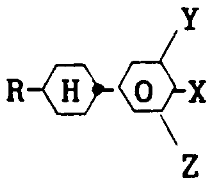

IIa1

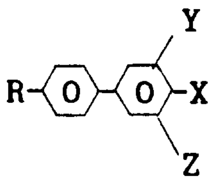

IIa2

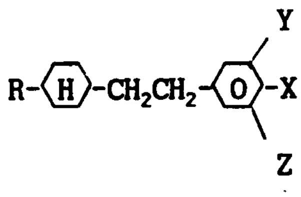

IIb1

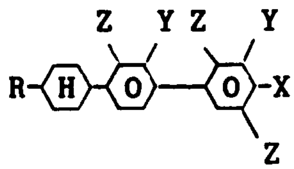

IIc1

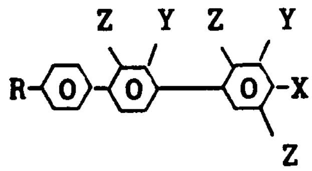

IIc2

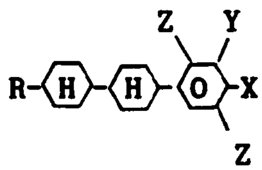

IIc3

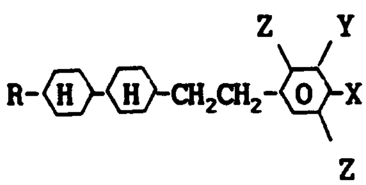

Id1

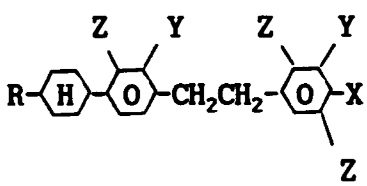

Id1

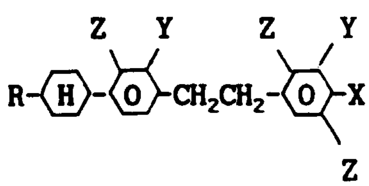

Id2

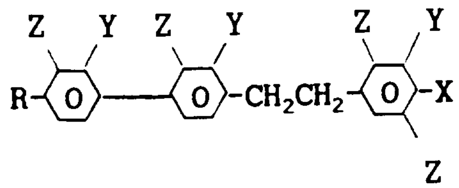

Id3

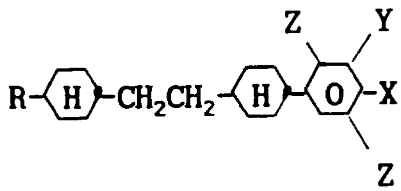

If1

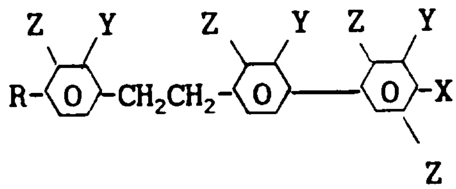

If2

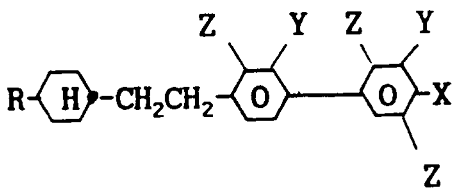

If3

In the partial formulae IIa1 to If3, R is in each case n-alkyl or n-alkenyl of up to 9 carbon atoms. Y and Z are each, independently of one another, H or F although one or two of the radicals Y and Z is preferably fluorine. However, X is preferably F, Cl, $-CF_3$, $-OCF_3$ or $-OCHF_2$.

Component B preferably represents 10 % to 100 %, in paticular 20 % to 80 %, of the mixture according to the invention.

The amounts of the compounds of the formulae III to XI in the mixtures according to the invention (preferred ranges) can be seen from the table below:

| | |
|---|---|
| Sum of compounds III and IV: | 0 % to 40 %, preferably 10 % to 30 % |
| Sum of compounds V and VI: | 0 % to 40 %, preferably 5 % to 20 % |
| Sum of compounds VII to XI: | 0 % to 20 %, preferably 5 % to 15 % |

It goes without saying that the mixtures according to the invention, which preferably consist essentially of the compounds mentioned as preferred for components A to C, may additionally also contain further compounds not mentioned here explicitly. However, this leads in many cases to more unfavourable properties. One skilled in the art can easily determine whether and in which amounts further compounds can be used.

The design of the MLC display according to the invention which consists of polarizers, electrode base plates and electrodes which have been subjected to surface treatment is that which is customary for this type of display. The definition of customary design is in this case very broad and also comprises all modifications and alterations of the MLC display, in particular also matrix display elements based on poly-Si

TFT or MIM.

However, a significant difference between the displays according to the invention and those which have been customary so far and are based on the twisted nematic cell is the selection of the liquid crystal parameters of the liquid crystal layer.

The preparation of the liquid crystal mixtures to be used according to the invention is carried out in the usual manner. As a rule, the desired amount of the components used in a minor amout is dissolved in the components which constitute the major component, advantageously at elevated temperature. It is also possible to mix solutions of the components in an organic solvent, for example in acetone, chloroform or methanol, and remove the solvent again after the mixing, for example by destillation.

The dielectrics can also contain further additives known to one skilled in the art and described in the literature. For example, 0-15 % pleochroic colorants or chiral doping substances can be added.

The examples which follow are intended to illustrate the invention without limiting it. Hereinbefore and hereinafter all temperatures are given in °C. The percentages are by weight.

We have filled the new mixtures into test cells and measured the RC times, characterizing the exponential decay of the voltage at the electrodes of the pixel. The voltage was applied in form of 60 µs pulses of variable amplitude between 1 V and 4 V. The subsequent evolution of the actual voltage at the pixel was detected via a fast, high impedance operational amplifier and recorded with a storage oscilloscope. This method has already been reported [RIEGER. B., BÖHM, E. and WEBER, G., 1989, Presentation at Freiburger Arbeitstagung Flüssige Kristalle, Conference Proceedings, Freiburg).

Example 1

A matrix liquid crystal display of the TFT type containing a nematic liquid crystal mixture consisting of
12 % of trans-1-p-trifluoromethyl-4-propylcyclohexane,
12 % of trans-1-p-trifluoromethyl-4-pentylcyclohexane,
8 % of trans-1-p-methoxyphenyl-4-propylcyclohexane,
14 % of 1-[trans-4-(trans-4-propylyclohexyl)-cyclohexyl]-2-(p-fluorophenyl)-ethane,
14 % of 1-[trans-4-(trans-4-pentylyclohexyl)-cyclohexyl]-2-(p-fluorophenyl)-ethane,
10 % of 1-[trans-4-(trans-4-propylycyclohexyl)-cyclohexyl]-2-(3,4-difluorophenyl)-ethane,
15 % of 1-[trans-4-(trans-4-propylyclohexyl)-cyclohexyl]-4-trifluoromethoxybenzene and
15 % of 1-[trans-4-(trans-4-butylyclohexyl)-cyclohexyl]-4-trifluoromethoxybenzene
shows a RC time of more than 200 msec at 80 °C and a threshold voltage $V_{10}$ of 2.22 V (1 min). The nematic mixture has a clearpoint C. of 102 °C, a viscosity $\eta$ of 17 mPa.s at 20° and an optical anisotropy $\Delta n$ of 0.080.

The composition of the mixtures of Examples 2 to 14 is given below, the individual compounds being coded as follows:

| | |
|---|---|
| PCH-301: | trans-1-p-methoxyphenyl-4-propylcyclohexane |
| CCH-301: | trans,trans-4-methoxy-4'-propylcyclohexylcyclohexane |
| CBC-33F: | 4,4'-bis-(trans-4-propylcyclohexyl)-2-fluorobiphenyl |
| CBC-55F: | 4,4'-bis-(trans-4-pentylcyclohexyl)-2-fluorobiphenyl |
| CBC-53F: | 4-(trans-4-pentylcyclohexyl)-4'-(trans-4-propylcyclohexyl)-2-fluorobiphenyl |
| CBC-33: | 4,4'-bis-(trans-4-propylcyclohexyl)-biphenyl |
| CBC-55: | 4,4'-bis-(trans-4-pentylcyclohexyl)-biphenyl |
| CBC-53: | 4-(trans-4-pentylcyclohexyl)-4'-(trans-4-propylcyclohexyl)-biphenyl |
| ECCP-33: | 1-[trans-4-(trans-4-propylcyclohexyl)-cyclohexyl]-2-(p-propylphenyl)-ethane |
| CCH-51F: | trans,trans-4-fluoromethyl-4'-pentylcyclohexylcyclohexane |
| CCH-31F: | trans,trans-4-fluoromethyl-4'-propylcyclohexylcyclohexane |
| PTP-102: | 4-methyl-4'-ethoxy-tolan |
| PTP-201: | 4-methoxy-4'-ethyl-tolan |
| CPTP-301: | 4-(trans-4-propylcyclohexyl)-4'-methoxytolan |
| CPTP-302: | 4-(trans-4-propylcyclohexyl)-4'-ethoxytolan |
| CPTP-303: | 4-(trans-4-propylcyclohexyl)-4'-propoxytolan |
| PCH-5F: | trans-1-p-fluorophenyl-4-pentylcyclohexane |
| PCH-6F: | trans-1-p-fluorophenyl-4-hexylcyclohexane |
| PCH-7F: | trans-1-p-fluorophenyl-4-heptylcyclohexane |
| EPCH-20CF$_3$: | 1-(trans-4-ethylcyclohexyl)-2-(p-trifluoromethoxyphenyl)-ethane |
| EPCH-30CF$_3$: | 1-(trans-4-propylcyclohexyl)-2-(p-trifluoromethoxyphenyl)-ethane |
| EPCH-50CF$_3$: | 1-(trans-4-pentylcyclohexyl)-2-(p-trifluoromethoxyphenyl)-ethane |

| | |
|---|---|
| EPCH-7OCF$_3$: | 1-(trans-4-heptylcyclohexyl)-2-(p-trifluoromethoxyphenyl)-ethane |
| PCH-3OCF$_3$: | trans-1-p-trifluoromethoxyphenyl-4-propylcyclohexane |
| PCH-5OCF$_3$: | trans-1-p-trifluoromethoxyphenyl-4-pentylcyclohexane |
| ECCP-3OCF$_3$: | 1-[trans-4-(trans-4-propylcyclohexyl)-cyclohexyl]-2-(p-trifluoromethoxyphenyl)-ethane |
| ECCP-5OCF$_3$: | 1-[trans-4-(trans-4-pentylcyclohexyl)-cyclohexyl]-2-(p-trifluoromethoxyphenyl)-ethane |
| CCP-2OCF$_3$: | p-[trans-4-(trans-4-ethylcyclohexyl)-cyclohexyl]-trifluoromethoxybenzene |
| CCP-3OCF$_3$: | p-[trans-4-(trans-4-propylcyclohexyl)-cyclohexyl]-trifluoromethoxybenzene |
| CCP-4OCF$_3$: | p-[trans-4-(trans-4-butylcyclohexyl)-cyclohexyl]-trifluoromethoxybenzene |
| CCP-5OCF$_3$: | p-[trans-4-(trans-4-pentylcyclohexyl)-cyclohexyl]-trifluoromethoxybenzene |
| BCH-3OCF$_3$: | 4-trifluoromethoxy-4'-(trans-4-propylcyclohexyl)-biphenyl |
| ECCP-3F.F: | 1-[trans-4-(trans-4-propylcyclohexyl)-cyclohexyl]-2-(3,4-difluorophenyl)-ethane |
| ECCP-5F.F: | 1-[trans-4-(trans-4-pentylcyclohexyl)-cyclohexyl]-2-(3,4-difluorophenyl)-ethane |
| CCP-3F.F: | 4-[trans-4-(trans-4-propylcyclohexyl)-cyclohexyl]-1,2-difluorobenzene |
| CCP-5F.F: | 4-[trans-4-(trans-4-pentylcyclohexyl)-cyclohexyl]-1,2-difluorobenzene |
| CCP-3F: | 4-[trans-4-(trans-4-propylcyclohexyl)-cyclohexyl]-fluorobenzene |
| ECCP-3F: | 1-[trans-4-(trans-4-propylcyclohexyl)-cyclohexyl]-2-(p-fluorophenyl)-ethane |
| ECCP-5F: | 1-[trans-4-(trans-4-pentylcyclohexyl)-cyclohexyl]-2-(p-fluorophenyl)-ethane |
| CP-3F: | p-fluorophenyl trans-4-(trans-4-propylcyclohexyl)-cyclohexanecarboxylate |
| CP-5F: | p-fluorophenyl trans-4-[trans-4-propylcyclohexyl)-cyclohexanecarboxylate |
| PYP-5F: | 2-p-fluorophenyl-5-pentylpyrimidine |
| PYP-6F: | 2-p-fluorophenyl-5-hexylpyrimidine |
| PYP-7F: | 2-p-fluorophenyl-5-heptylpyrimidine |
| PYP-3OCF$_3$: | 2-p-trifluoromethoxyphenyl-5-propylpyrimidine |
| PYP-5OCF$_3$: | 2-p-trifluoromethoxyphenyl-5-pentylpyrimidine |
| PYP-7OCF$_3$: | 2-p-trifluoromethoxyphenyl-5-heptylpyrimidine |
| PCH-3: | p-trans-4-propylcyclohexyl-benzonitrile |
| PCH-4: | p-trans-4-butylcyclohexyl-benzonitrile |
| PCH-5: | p-trans-4-pentylcyclohexyl-benzonitrile |
| ECCP-3: | 1-[trans-4-(trans-4-propylcyclohexyl)-cyclohexyl]-2-(p-cyanophenyl)-ethane |
| ECCP-3CF$_3$: | 1-[trans-4-(trans-4-propylcyclohexyl)-cyclohexyl]-2-(p-trifluoromethylphenyl)-ethane |
| ECCP-5CF$_3$: | 1-[trans-4-(trans-4-pentylcyclohexyl)-cyclohexyl]-2-(p-trifluoromethylphenyl)-ethane |
| PYP-5N.F: | 2-(3-fluoro-4-cyanophenyl)-5-pentylpyrmidine |
| PYP-7N.F: | 2-(3-fluoro-4-cyanophenyl)-5-heptylpyrimidine |
| PCH-3OCF$_2$: | trans-1-p-difluoromethoxyphenyl-4-propylcyclohexane |
| PCH-5OCF$_2$: | trans-1-p-difluoromethoxyphenyl-4-pentylcyclohexane |
| PCH-3OCF$_2$: | trans-1-p-difluoromethoxyphenyl-4-propylcyclohexane |
| PCH-3CF$_3$: | trans-1-p-trifluoromethyl-4-propylcyclohexane |
| PCH-5CF$_3$: | trans-1-p-trifluoromethyl-4-pentylcyclohexane |
| EPCH-5CF$_3$: | 1-(trans-4-pentylcyclohexyl)-2-(p-trifluoromethylphenyl)-ethane |
| CCP-2CF$_3$: | 4-[trans-4-(trans-4-ethylcyclohexyl)-cyclohexyl]-1-trifluoromethylbenzene |
| CCP-3CF$_3$: | 4-[trans-4-(trans-4-propylcyclohexyl)-cyclohexyl]-1-trifluoromethylbenzene |
| CCP-5CF$_3$: | 4-[trans-4-(trans-4-pentylcyclohexyl)-cyclohexyl]-1-trifluoromethylbenzene |
| CECP-3CF$_3$: | 4-[trans-4-(trans-4-propylcyclohexyl)-cyclohexyl]-1-trifluoromethylbenzene |
| BCH-3CF$_3$: | 4-trifluoromethyl-4'-(trans-4-propylcyclohexyl)-biphenyl |
| BECH-3CF$_3$: | 4-trifluoromethyl-4'-(trans-4-propylcyclohexylethyl)-biphenyl |
| EBCH-3CF$_3$: | 4-[p-(trans-4-propylcyclohexyl)-phenylethyl]-1-trifluoromethylbenzene |
| CCP-3CF$_3$.F: | 4-[trans-4-(trans-propylcyclohexyl)-cyclohexyl]-2-fluoro-1-trifluoromethylbenzene |
| BCH-3F.F: | 3,4-difluoro-4'-(trans-4-propylcyclohexyl)-biphenyl |
| BCH-5F.F: | 3,4-difluoro-4'-(trans-4-pentylcyclohexyl)-biphenyl |
| CCP-5F.F.F: | 4-[trans-4-(trans-pentylcyclohexyl)-cyclohexyl]-1,2,6-trifluorobenzene |

**Example 2**

| | |
|---|---|
| PCH-301 | 10.00 |
| PCH-7F | 4.00 |
| EPCH-3OCF$_3$ | 9.00 |
| EPCH-5CF$_3$ | 5.00 |
| CCP-3OCF$_3$ | 13.00 |
| CCP-5OCF$_3$ | 12.00 |
| ECCP-3OCF$_3$ | 12.00 |
| ECCP-5OCF$_3$ | 8.00 |
| ECCP-3F.F | 12.00 |
| ECCP-3F | 8.00 |
| CBC-33F | 2.00 |
| CBC-53F | 3.00 |
| CBC-55F | 2.00 |

**Example 3**

| | |
|---|---|
| PCH-3OCF$_2$ | 9.00 |
| PCH-5OCF$_2$ | 8.00 |
| PCH-5OCF$_2$ | 9.00 |
| CCH-301 | 7.00 |
| CCP-3OCF$_3$ | 13.00 |
| CCP-5OCF$_3$ | 12.00 |
| ECCP-3OCF$_3$ | 8.00 |
| ECCP-5OCF$_3$ | 6.00 |
| BECH-3CF$_3$ | 9.00 |
| ECCP-3F | 6.00 |
| CBC-33F | 5.00 |
| CBC-53F | 4.00 |
| CBC-55F | 4.00 |

**Example 4**

| | |
|---|---|
| CCH-301 | 7.00 |
| PCH-5F | 12.00 |
| PCH-7F | 9.00 |
| CCP-3OCF$_3$ | 13.00 |
| CCP-5OCF$_3$ | 12.00 |
| ECCP-3OCF$_3$ | 11.00 |
| ECCP-5OCF$_3$ | 8.00 |
| EBCH-3CF$_3$ | 12.00 |
| ECCP-3F | 7.00 |
| CBC-33F | 3.00 |
| CBC-53F | 3.00 |
| CBC-55F | 3.00 |

**Example 5**

| | |
|---|---|
| PCH-5F | 13.0 |
| PCH-7F | 10.0 |
| CCP-3OCF$_3$ | 13.0 |
| CCP-4OCF$_3$ | 11.0 |
| CCP-5OCF$_3$ | 12.0 |
| ECCP-3OCF$_3$ | 11.0 |
| ECCP-5OCF$_3$ | 8.0 |
| ECCP-3F.F | 9.0 |
| BCH-3CF$_3$ | 6.0 |
| CBC-33F | 3.0 |
| CBC-53F | 2.0 |
| CBC-55F | 2.0 |

**Example 6**

| | |
|---|---|
| PCH-5F | 11.0 |
| PCH-6F | 4.0 |
| PCH-7F | 10.0 |
| CCP-2CF$_3$ | 9.0 |
| CCP-3CF$_3$ | 13.0 |
| CECP-3CF$_3$ | 7.0 |
| CCP-5CF$_3$ | 11.0 |
| ECCP-3OCF$_3$ | 10.0 |
| ECCP-5OCF$_3$ | 8.0 |
| ECCP-3F.F | 8.0 |
| CBC-33F | 3.0 |
| CBC-53F | 3.0 |
| CBC-55F | 3.0 |

**Example 7**

| | |
|---|---|
| PCH-3CF$_3$ | 13.0 |
| PCH-5CF$_3$ | 10.0 |
| CCP-2CF$_3$ | 10.0 |
| CCP-3CF$_3$ | 13.0 |
| CECP-3CF$_3$ | 7.0 |
| CCP-5CF$_3$ | 11.0 |
| ECCP-3OCF$_3$ | 11.0 |
| EBCH-3CF$_3$ | 10.0 |
| ECCP-3F | 8.0 |
| CBC-33F | 3.0 |
| CBC-53F | 2.0 |
| CBC-55F | 2.0 |

C. 91 °C, $\Delta n$ = 0,09

$\eta$ = 19 mPa.s, $V_{10}$ = 1,8 V

**Example 8**

| | |
|---|---|
| PCH-3 | 19.0 |
| PCH-5CF$_3$ | 7.0 |
| CCP-2OCF$_3$ | 11.0 |
| CCP-3OCF$_3$ | 13.0 |
| CCP-4OCF$_3$ | 6.0 |
| CCP-5OCF$_3$ | 12.0 |
| ECCP-3OCF$_3$ | 7.0 |
| ECCP-3F.F | 10.0 |
| ECCP-5F.F | 8.0 |
| ECCP-3F | 7.0 |

**Example 9**

| | |
|---|---|
| PCH-3 | 20.00 |
| PCH-4 | 8.00 |
| PCH-5CF$_3$ | 8.00 |
| PCH-6F | 8.00 |
| PCH-7F | 7.00 |
| ECCP-3F | 7.00 |
| ECCP-5F | 7.00 |
| CP-3F | 12.00 |
| CP-5F | 12.00 |
| ECCP-3 | 11.00 |

Example 10

| | |
|---|---|
| PCH-3 | 20.00 |
| PCH-5$CF_3$ | 9.00 |
| PCH-6F | 9.00 |
| PCH-7F | 9.00 |
| ECCP-3F | 8.00 |
| ECCP-5F | 8.00 |
| CP-3F | 12.00 |
| CP-5F | 12.00 |
| ECCP-3 | 13.00 |

C. 86°, $\Delta n$ = 0,10

$\eta$ = 18 mPa.s, $V_{10}$ = 2,0 V

Example 11

| | |
|---|---|
| PCH-3 | 24.00 |
| CCH-31F | 7.00 |
| CCH-51F | 7.00 |
| CCP-3$CF_3$ | 8.00 |
| ECCP-5F | 8.00 |
| ECCP-3O$CF_3$ | 11.00 |
| ECCP-5O$CF_3$ | 11.00 |
| ECCP-3$CF_3$ | 11.00 |
| ECCP-3 | 13.00 |

Example 12

| | |
|---|---|
| PCH-3 | 16.00 |
| PCH-301 | 8.00 |
| $CCP-3CF_3$ | 9.00 |
| $CCP-5CF_3$ | 8.00 |
| $ECCP-3OCF_3$ | 8.00 |
| $ECCP-5OCF_3$ | 7.00 |
| ECCP-3F.F | 7.00 |
| ECCP-3F | 6.00 |
| $ECCP-3CF_3$ | 7.00 |
| $BCH-3OCF_3$ | 7.00 |
| PTP-102 | 4.00 |
| PTP-201 | 4.00 |
| CPTP-301 | 2.00 |
| CPTP-302 | 2.00 |
| CPTP-303 | 3.00 |

C. 102°, $\Delta n$ = 0,14

$\eta$ = 19 mPa.s, $V_{10}$ = 2,0 V

Example 13

| | |
|---|---|
| $PCH-5CF_3$ | 11.0 |
| PCH-6F | 4.0 |
| PCH-7F | 10.0 |
| $CCP-2CF_3$ | 9.0 |
| $CCP-3OCF_3$ | 13.0 |
| $CCP-4OCF_3$ | 7.0 |
| $CCP-5OCF_3$ | 11.0 |
| CCP-3F.F | 10.0 |
| CCP-5F.F | 8.0 |
| CCP-3F | 8.0 |
| CBC-33F | 3.0 |
| CBC-53F | 3.0 |
| CBC-55F | 3.0 |

C. 93°, $\Delta n$ = 0,09

$V_{10}$ = 2,1 V, $\eta$ = 16 mPa.s

Example 14

| | |
|---|---|
| PCH-3 | 10.00 |
| PCH-5CF$_3$ | 18.00 |
| PCH-6F | 14.00 |
| PCH-7F | 10.00 |
| CCP-3F.F | 9.00 |
| CCP-5F.F | 7.00 |
| CBC-33 | 5.00 |
| CBC-53 | 6.00 |
| CBC-55 | 5.00 |
| CBC-33F | 5.00 |
| CBC-53F | 6.00 |
| CBC-55F | 5.00 |

C. 100 °C, Δn = 0,10

$V_{10}$ = 2,3 V, η = 16 mPa.s

Example 15

| | |
|---|---|
| PCH-5CF$_3$ | 10.0 |
| PCH-6F | 7.0 |
| PCH-7F | 15.0 |
| CCP-2OCF$_3$ | 10.0 |
| CCP-3OCF$_3$ | 12.0 |
| CCP-4OCF$_3$ | 8.0 |
| CCP-5OCF$_3$ | 12.0 |
| BCH-3F.F | 10.0 |
| BCH-5F.F | 16.0 |

C. 65 °C, Δn = 0,0892

$V_{10}$ = 1,59 V,

**Example 16**

| | |
|---|---|
| PCH-3$CF_3$ | 10.0 |
| PCH-6F | 7.0 |
| PCH-7F | 15.0 |
| CCP-2O$CF_3$ | 10.0 |
| CCP-3O$CF_3$ | 12.0 |
| CCP-4O$CF_3$ | 8.0 |
| CCP-5O$CF_3$ | 12.0 |
| BCH-3F.F | 10.0 |
| BCH-5F.F | 16.0 |

C. 63 °C, $\Delta n$ = 0,0873
$V_{10}$ = 1,55 V,

**Example 17**

| | |
|---|---|
| PCH-5F | 10.0 |
| PCH-6F | 7.0 |
| PCH-7F | 15.0 |
| CCP-2O$CF_3$ | 10.0 |
| CCP-3O$CF_3$ | 12.0 |
| CCP-4O$CF_3$ | 8.0 |
| CCP-5O$CF_3$ | 12.0 |
| CCP-3$CF_3$.F | 10.0 |
| BCH-5F.F | 16.0 |

C. 65 °C, $\Delta n$ = 0,0827
$V_{10}$ = 1,59 V,

**Example 18**

| | |
|---|---|
| PCH-5F | 8.0 |
| PCH-7F | 5.0 |
| CCP-2O$CF_3$ | 10.0 |
| CCP-3O$CF_3$ | 12.0 |
| CCP-4O$CF_3$ | 8.0 |
| CCP-5O$CF_3$ | 10.0 |
| BCH-3F.F | 10.0 |
| BCH-5F.F | 10.0 |
| CCP-3F.F.F | 9.0 |
| ECCP-3F.F | 6.0 |
| CCP-3$CF_3$.F | 12.0 |

C. 91 °C, $\Delta n$ = 0,0945
$V_{10}$ = 1,71 V,

## Claims

**1.** Matrix liquid crystal display containing
- two plane parallel support plates which together with a frame form a cell,

- integrated non-linear elements for switching individual picture elements on the support plates and
- nematic liquid crystal mixture which is present in the cell, has a positive dielectric anisotropy, a high specific resistivity, a nematic phase range of at least 60 °C, a maximum viscosity at 20 °C of 30 mPa.s and a mean dielectricity constant $\bar{\epsilon} \leqq 8$,

and comprises

a) at least 10 % by weight of a liquid-crystalline component B comprising one or more compounds having a dielectric anisotropy of more than +1.5, selected from the group consisting of compounds of the formula IIa to IIf:

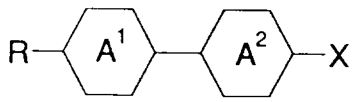
IIa

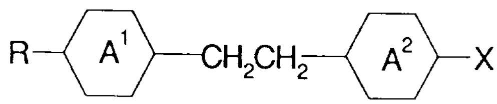
IIb

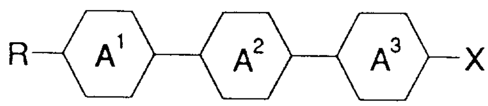
IIc

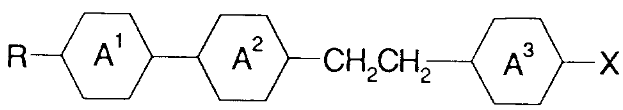
IId

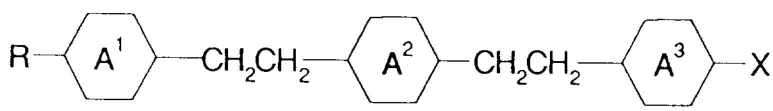
IIe

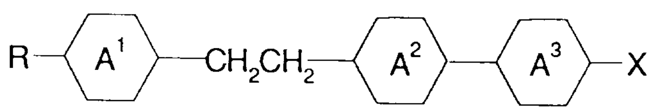
IIf

in which

| | |
|---|---|
| R | is n-alkyl or n-alkenyl of up to 9 carbon atoms, |
| X | is cyano, -NCS, F, Cl, -CHF2, $-OCF_3$, $-OCHF_2$, $-OCF_2CF_2H$ or $-OC_2F_5$, and |
| the rings $A^1$, $A^2$ and $A^3$ | are each, independently of one another, 1,4-phenylene, 2- or 3-fluoro-1,4-phenylene, 2,3-difluoro-1,4-phenylene, 2,6-difluoro-1,4-phenylene, trans-1,4-cyclohexylene or 1,4-cyclohexenylene. |

b) up to 90 % by weight of a liquid-crystalline component A comprising one or more compounds having a dielectric anisotropy of -1.5 to +1.5 of the general formula I

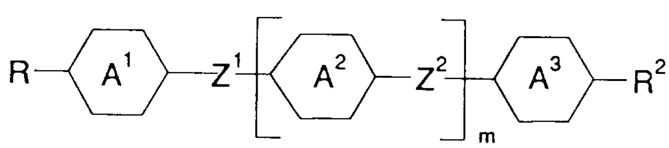
I

in which

| | |
|---|---|
| $R^1$ and $R^2$ | are each, independently of one another, n-alkyl, - fluoroalkyl or n- |

alkenyl having up to 9 carbon atoms,

the rings $A^1$, $A^2$ and $A^3$ are each, independently of one another, 1,4-phenylene, 2- or 3-fluoro-1,4-phenylene, trans-1,4-cyclohexylene or 1,4-cyclohexenylene,

$Z^1$ and $Z^2$ are each, independently of one another, - $CH_2CH_2$ or a single bond, and

m is 0, 1 or 2, and $A^2$ and $Z^2$ are each identical or different if m = 2, and

c) 0 to 20 % by weight of a liquid-crystalline component C comprising one or more compounds having a dielectric anisotropy of less than -1.5,

characterized in that the liquid crystal mixture comprises one or more compounds selected from the group consisting of 1a to 1g:

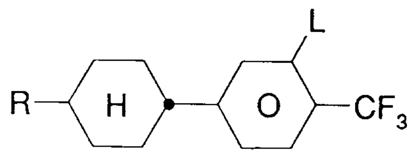
1a

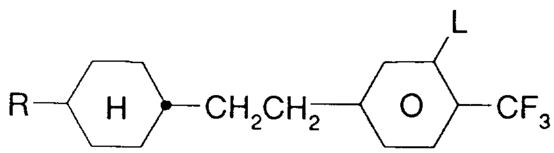
1b

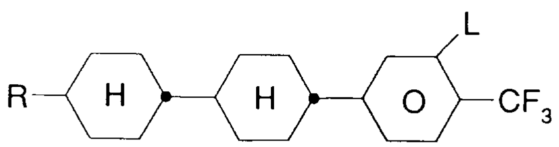
1c

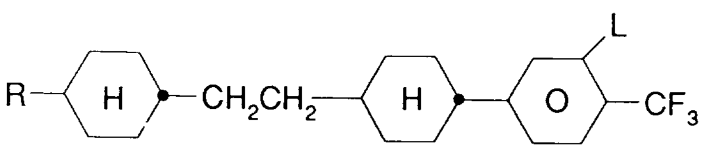
1d

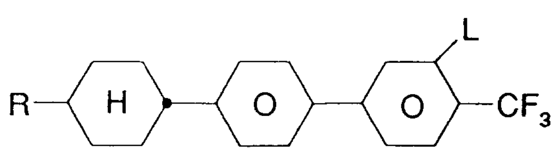
1e

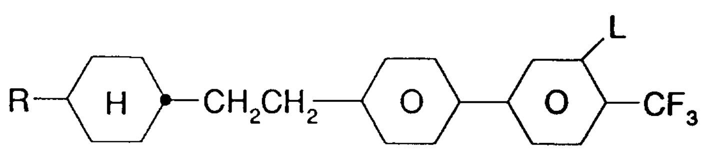
1f

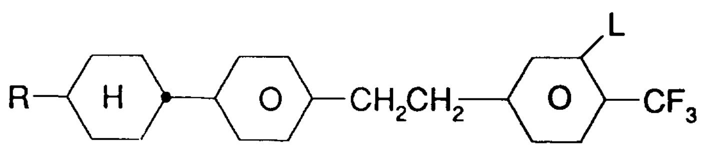
1g

wherein R denotes n-alkyl, n-oxaalkyl or n-alkenyl with up to 9 carbon atoms, and L is H or F, preferably H.

2. Display according to Claim 1, characterized in that component B essentially consists of one or more compounds selected from the group consisting of 1a to 1g and nitrile-containing compounds of formulae IIa to IIf, wherein X is CN.

3. Display according to Claim 2, characterized in that component B contains compounds of the formulae IIa to IIf in which X is -NCS, F, Cl, $-CHF_2$, -OCF3, $-OCHF_2$, $-OCF_2CF_2H$ or $-OC_2F_5$ and the amount of cyano compounds in component B is 0 to 50% by weight.

4. Display according to Claim 3, characterized in that component B does not contain any compounds of the formulae IIa to IIf in which X is cyano.

5. Display according to at least one of Claims 1 to 4, characterized in that X is F, Cl, $-OCF_3$, $-OCHF_2$ or $-CHF_2$.

6. Display according to at least one of Claims 1 to 5, characterized in that component A contains one or more compounds selected from the group consisting of II1 to II7:

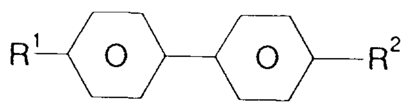

II1

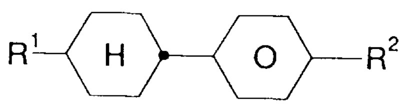

II2

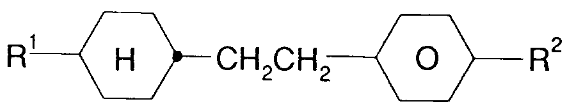

II3

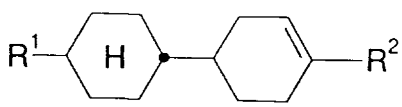

II4

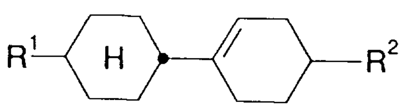

II5

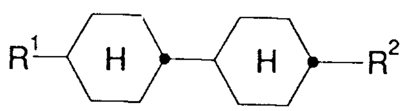

II6

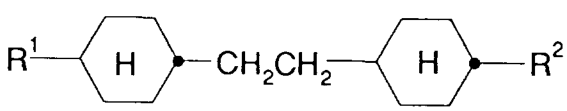

II7

in which $R^1$ and $R^2$ have the meaning given in Claim 1.

7. Display according to Claim 6, characterized in that component A contains one or more compounds selected from the group consisting of II8 to II20:

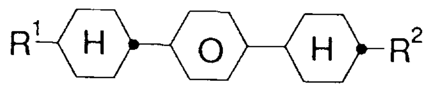 II8

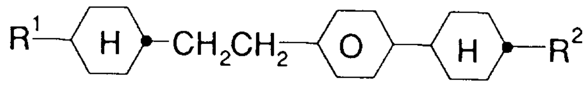 II9

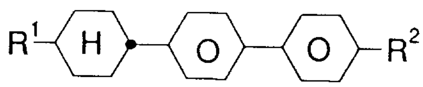 II10

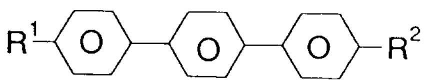 II11

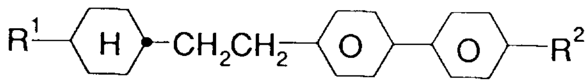 II12

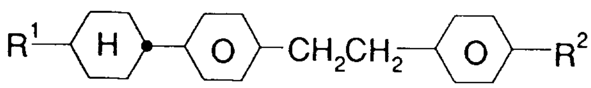 II13

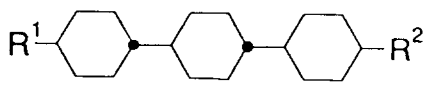 II14

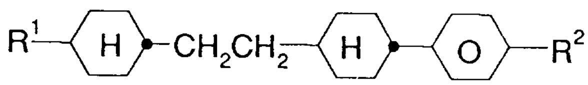 II15

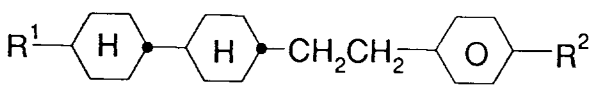 II16

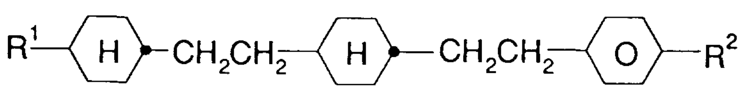 II17

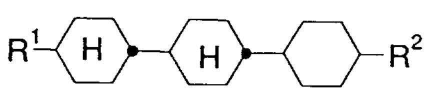 II18

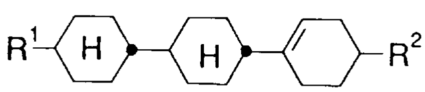 II19

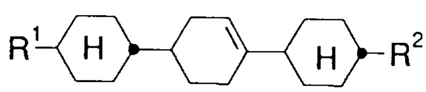 II20

in which $R^1$ and $R^2$ have the meaning given in Claim 1 and the 1,4-phenylene groups in II8 to II17 can each, independently of one another, also be mono- or polysubstituted by fluorine.

**8.** Display according to Claim 6 or 7, characterized in that component A contains of one or more compounds selected from the group consisting of II21 to II25:

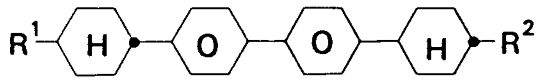 II21

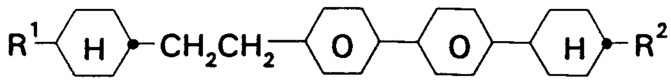 II22

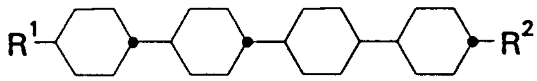 II23

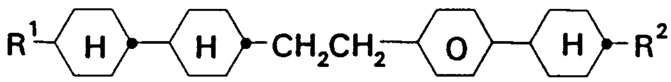 II24

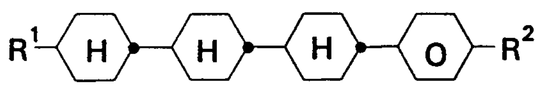 II25

in which $R^1$ and $R^2$ have the meaning given in Claim 1 and the 1,4-phenylene groups in II21 to II25 can each, independently of one another, also be mono- or polysubstituted by fluorine.

**9.** Display according to at least one of Claims 1 to 8, characterized in that component A contains one or more compounds selected from the group consisting of II26 to II27:

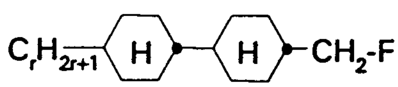 II26

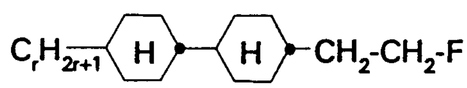 II27

in which $C_rH_{2r+1}$ is a straight-chain alkyl group of up to 7 carbon atoms.

**10.** Display according to at least one of Claims 1 to 9, characterized in that the liquid crystal mixture optionally contains one or more compounds selected from the group consisting of III, IV and IVa:

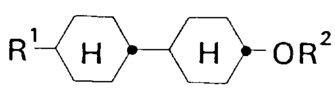 III

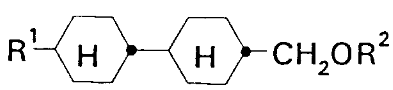 IV

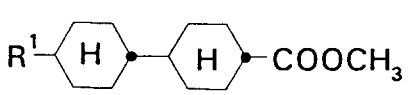 IVa

in which $R^1$ and $R^2$ have the meaning given in Claim 2.

**11.** Display according to at least one of Claims 1 to 10, characterized in that the liquid crystal mixture optionally contains one or more compounds of the formula

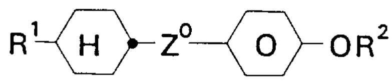

in which

$R^1$ and $R^2$ have the meaning given in Claim 1, and

$Z^0$ is a single bond, $-CH_2CH_2-$

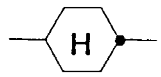 or

,

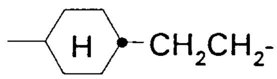 .

**12.** Display according to at least one of Claims 1 to 11, characterized in that the liquid crystal mixture optionally contains one or more compounds selected from the group consisting of V and VI:

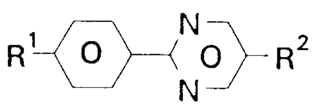 V

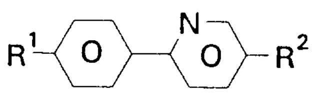 VI

in which $R^1$ and $R^2$ have the meaning given in Claim 1.

**13.** Display according to at least one of Claims 1 to 12, characterized in that the liquid crystal mixture optionally contains one or more compounds selected from the group consisting of VII to XIII:

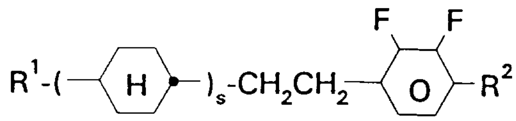

VII

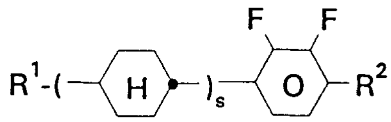

VIII

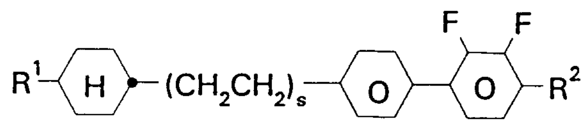

IX

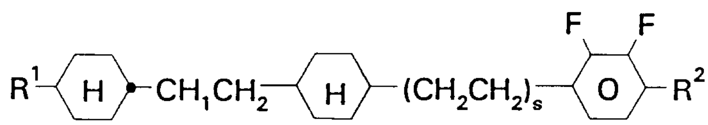

X

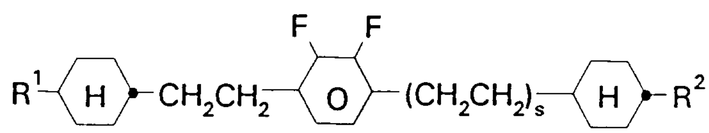

XI

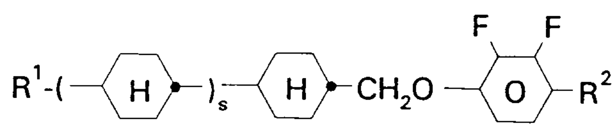

XII

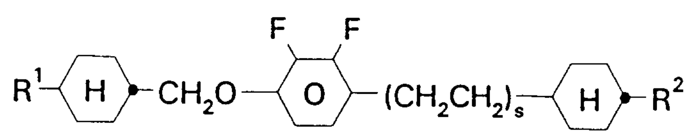

XIII

in which

| | |
|---|---|
| $R^1$ and $R^2$ | have the meaning given in Claim 2, and |
| s | is 0 or 1. |

**14.** Display according to at least one of the claims 1 to 13, characterized in that the ring bound to X, i.e. $A^2$ in IIa and IIb and $A^3$ in IIc to IIf is 1,4-phenylene which is unsubstituted or mono-or disubstituted by fluorine.

**15.** Display according to claim 14, characterized in that $A^2$-X and $A^3$-X are preferably a group selected from the formulae (a) to (i):

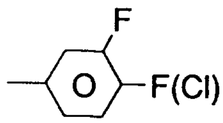

(a)

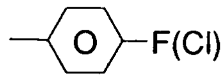

(b)

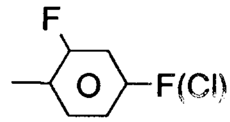

(c)

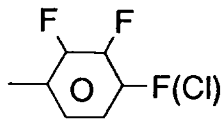

(d)

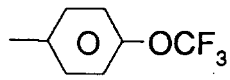

(e)

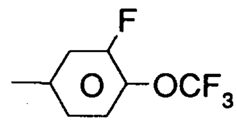

(f)

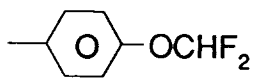

(g)

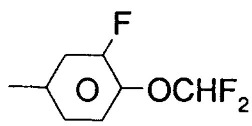

(h)

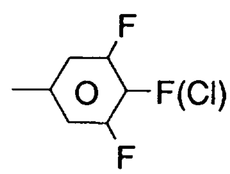

(i)

of which (a), (b), (d), (e), (g), (h) and (i) are particularly preferred.

**16.** Display according to claim 14 or 15, characterized in that the compounds of formulae IIa to IIf are selected from the following formulae:

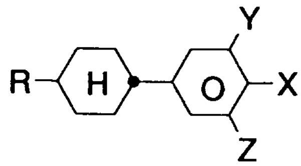

IIa1

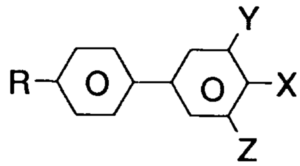

IIa2

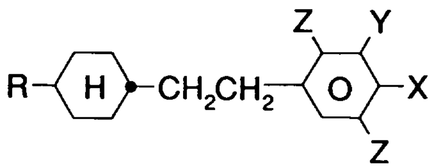

IIb1

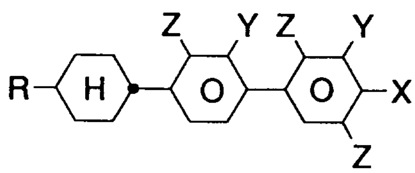

IIc1

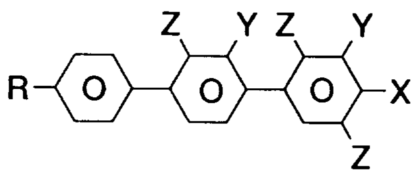

IIc2

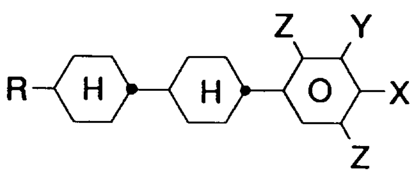

IIc3

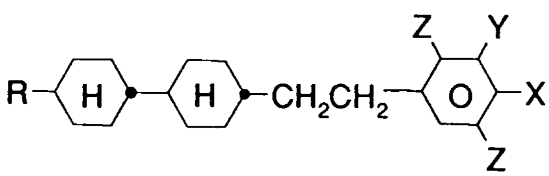

Id1

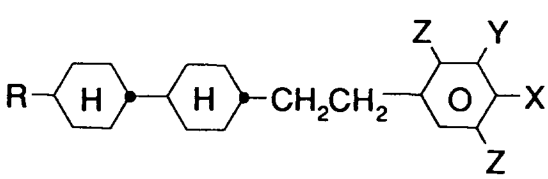

Id1

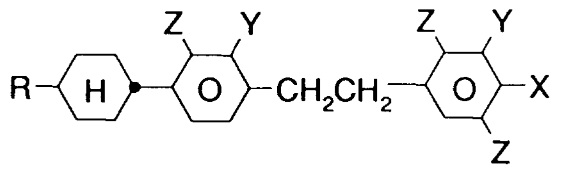

Id2

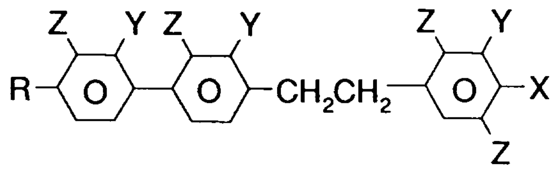

Id3

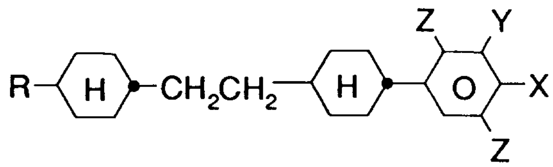

If1

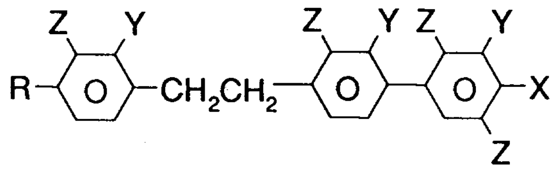

If2

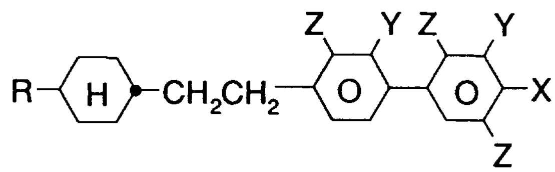

If3

in which R is in each case n-alkyl or n-alkenyl of up to 9 carbon atoms, Y and Z are each, independently of one another, H or F, one or two of the radicals Y and Z is fluorine, X is F, Cl, $-CF_3$, $-OCF_3$ or $-OCHF_2$.

**17.** Liquid crystal mixture of the composition defined in one of Claims 1 to 16.

**Patentansprüche**

**1.** Matrix-Flüssigkristallanzeige mit

- zwei planparallelen Trägerplatten, die zusammen mit einer Umrandung eine Zelle bilden,
- integrierten nichtlinearen Elementen zur Schaltung einzelner Bildelemente auf den Trägerplatten und
- einer in der Zelle befindlichen und einer

a) mindestens 10 Gew.-% einer flüssigkristallinen Komponente B aus einer oder mehreren Verbindungen mit einer dielektrischen Anisotropie von mehr als +1,5, ausgewählt aus der Gruppe der Verbindungen der Formel IIa bis IIf:

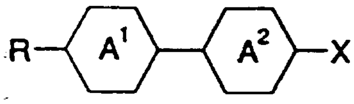

IIa

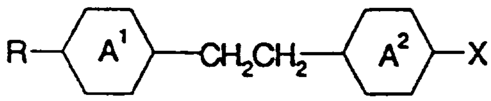

IIb

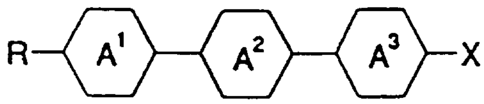

IIc

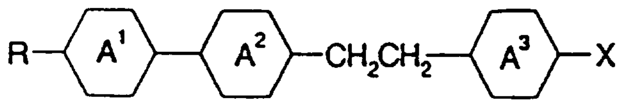

IId

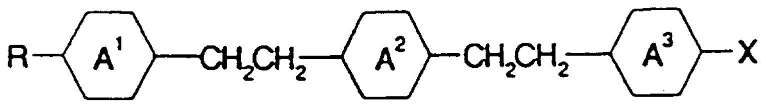

IIe

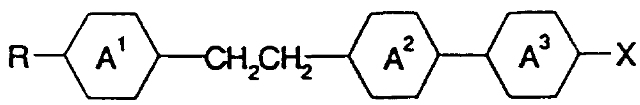

IIf

worin

R n-Alkyl oder n-Alkenyl mit bis zu 9 Kohlenstoffatomen,

X Cyan, -NCS, F, Cl, $-CHF_2$, $-OCF_3$, $-OCHF_2$, - $OCF_2CF_2H$ oder $-OC_2F_5$, und

die Ringe $A^1$, $A^2$ und $A^3$ jeweils unabhängig voneinander 1,4-Phenylen, 2- oder 3-Fluor-1,4-phenylen, 2,3-Difluor-1,4-phenylen, 2,6-Difluor-1,4-phenylen, trans-1,4-Cyclohexylen, 1,4-Cyclohexenylen bedeuten,

b) bis zu 90 Gew.-% einer flüssigkristallinen Komponente A aus einer oder mehreren Verbindungen mit einer dielektrischen Anisotropie von -1,5 bis +1,5 der allgemeinen Formel I

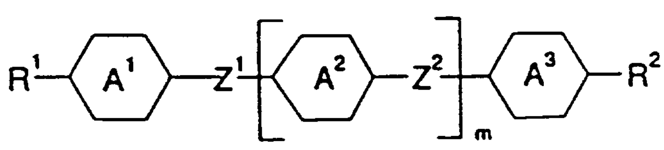

I

worin

$R^1$ und $R^2$ jeweils unabhängig voneinander n-Alkyl oder -Fluoralkyl oder n-Alkenyl mit bis zu 9 Kohlen stoffatomen

die Ringe $A^1$, $A^2$ und $A^3$ jeweils unabhängig voneinander 1,4-Phenylen, 2- oder 3-Fluor-1,4-phenylen, trans-1,4-Cyclohexylen, 1,4-Cyclohexenylen,

$Z^1$ und $Z^2$ jeweils unabhängig voneinander $-CH_2CH_2-$ oder eine Einfachbindung, und

m 0, 1 oder 2 bedeuten, und $A^2$ und $Z^2$ bei m gleich 2 jeweils gleich oder verschieden sind, sowie

c) 0 bis 20 Gew.-% einer flüssigkristallinen Komponente C aus einer oder mehreren Verbindungen mit einer dielektrischen Anisotropie von weniger als -1,5, enthaltenden nematischen Flüssigkristallmischung mit positiver dielektrischer Anisotropie, hohem spezifischem Widerstand, einem nematischen Phasenbereich von mindestens 60 °C, einer Viskosität bei 20 °C von höchstens 30 mPa.s und einer mittleren Dielektrizitätskonstante von $\bar{\epsilon} \leq 8$, dadurch gekennzeichnet, daß die Flüssigkristallmischung eine oder mehrere Verbindungen enthält, ausgewählt aus der Gruppe 1a bis 1g:

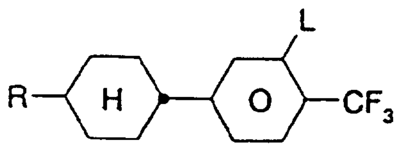

1a

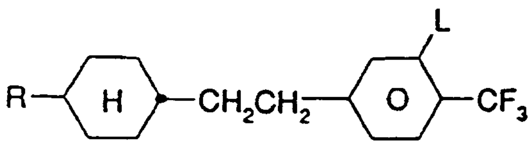

1b

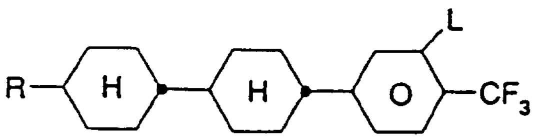

1c

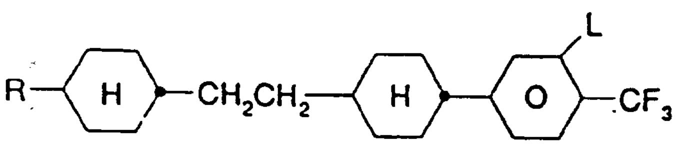

1d

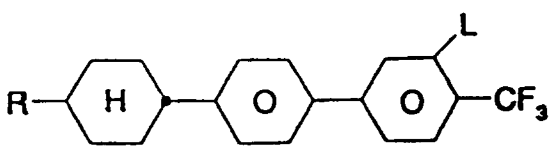

1e

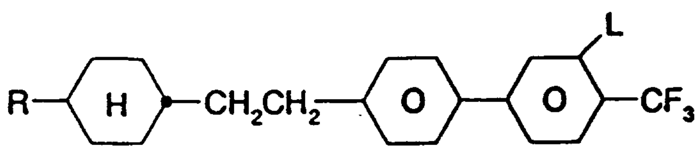

1f

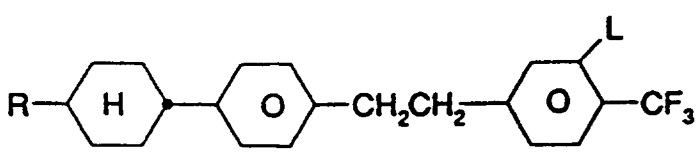

1g

worin R n-Alkyl, n-Oxaalkyl oder n-Alkenyl mit bis zu 9 Kohlenstoffatomen und L H oder F, vorzugsweise H bedeuten.

**2.** Anzeige nach Anspruch 1, dadurch gekennzeichnet, daß die Komponente B im wesentlichen aus einer oder mehreren Verbindungen, ausgewählt aus der Gruppe 1a bis 1g, und cyanhaltigen Verbindungen der Formeln IIa bis IIf mit X gleich CN besteht.

**3.** Anzeige nach Anspruch 2, dadurch gekennzeichnet, daß die Komponente B Verbindungen der Formeln IIa bis IIf enthält, worin X -NCS, F, Cl, $-CHF_2$, $-OCF_3$, $-OCHF_2$, $-OCF_2CF_2H$ oder $-OC_2F_5$ bedeutet, und der Anteil an Cyanverbindungen in der Komponente B 0 bis 50 Gew.-% beträgt.

**4.** Anzeige nach Anspruch 3, dadurch gekennzeichnet, daß die Komponente B keine Verbindungen der Formeln IIa bis IIf mit X gleich Cyan enthält.

**5.** Anzeige nach mindestens einem der Ansprüche 1 bis 4, dadurch gekennzeichnet, daß X F, Cl, $-OCF_3$, $-OCHF_2$ oder $-CHF_2$ bedeutet.

**6.** Anzeige nach mindestens einem der Ansprüche 1 bis 5, dadurch gekennzeichnet, daß die Komponente A eine oder mehrere Verbindungen, ausgewählt aus der Gruppe II1 bis II7:

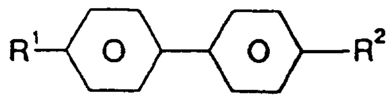

II1

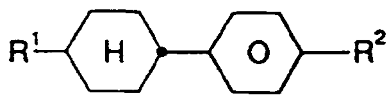

II2

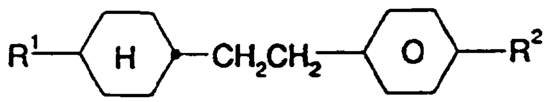

II3

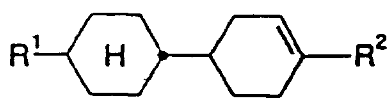

II4

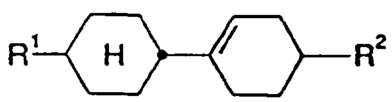

II5

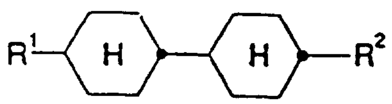

II6

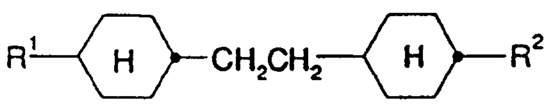

II7

worin $R^1$ und $R^2$ die in Anspruch 1 angegebene Bedeutung besitzen, enthält.

**7.** Anzeige nach Anspruch 6, dadurch gekennzeichnet, daß die Komponente A eine oder mehrere Verbindungen, ausgewählt aus der Gruppe II8 bis II20:

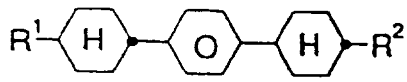

II8

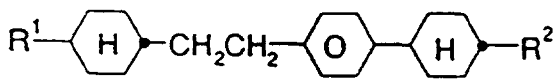

II9

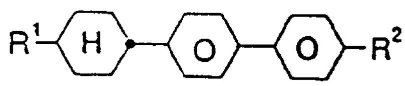

II10

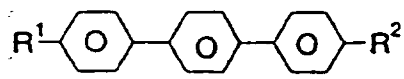

II11

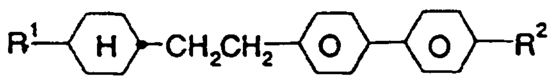

II12

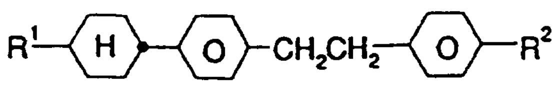

II13

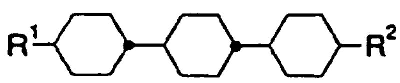

II14

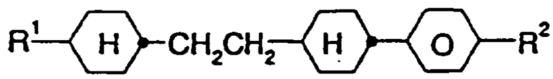

II15

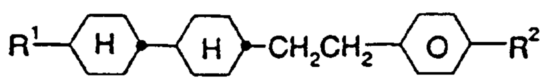

II16

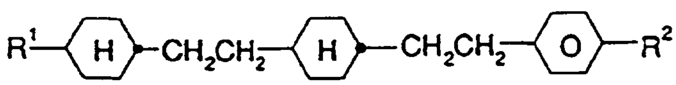

II17

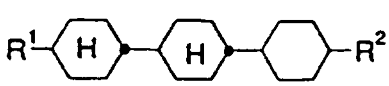

II18

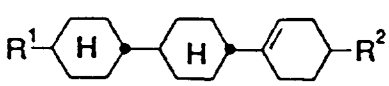

II19

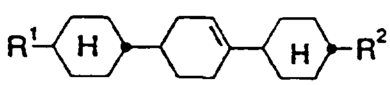

II20

worin $R^1$ und $R^2$ die in Anspruch 1 angegebene Bedeutung besitzen und die 1,4-Phenylengruppen in II8 bis II17 jeweils unabhängig voneinander auch durch Fluor einfach oder mehrfach substituiert sein können, enthält.

**8.** Anzeige nach Anspruch 6 oder 7, dadurch gekennzeichnet, daß die Komponente A eine oder mehrere Verbindungen, ausgewählt aus der Gruppe II21 bis II25:

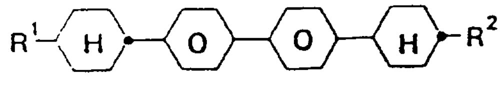 II21

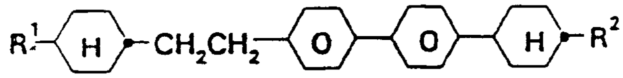 II22

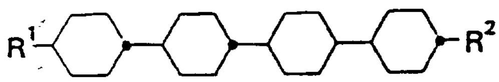 II23

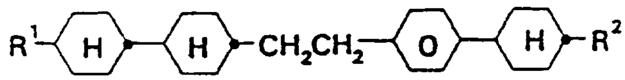 II24

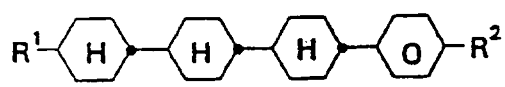 II25

worin $R^1$ und $R^2$ die in Anspruch 1 angegebene Bedeutung besitzen und die 1,4-Phenylengruppen in II21 bis II25 jeweils unabhängig voneinander auch durch Fluor einfach oder mehrfach substituiert sein können, enthält.

**9.** Anzeige nach mindestens einem der Ansprüche 1 bis 8, dadurch gekennzeichnet, daß die Komponente A eine oder mehrere Verbindungen, ausgewählt aus der Gruppe II26 bis II27:

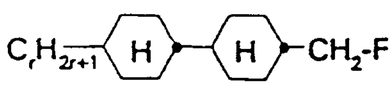 II26

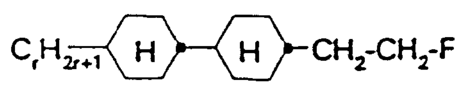 II27

worin $C_rH_{2r+1}$ eine geradkettige Alkylgruppe mit bis zu 7 Kohlenstoffatomen bedeutet, enthält.

**10.** Anzeige nach mindestens einem der Ansprüche 1 bis 9, dadurch gekennzeichnet, daß die Flüssigkristallmischung gegebenenfalls eine oder mehrere Verbindungen, ausgewählt aus der Gruppe III, IV und IVa:

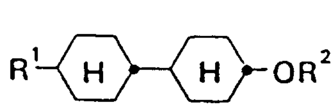 III

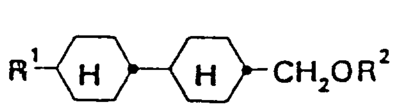 IV

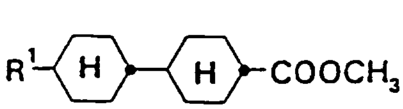 IVa

worin $R^1$ und $R^2$ die in Anspruch 1 angegebene Bedeutung besitzen, enthält.

**11.** Anzeige nach mindestens einem der Ansprüche 1 bis 10, dadurch gekennzeichnet, daß die Flüssigkristallmischung gegebenenfalls eine oder mehrere Verbindungen der Formel

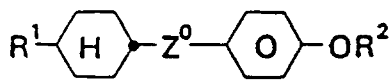

worin
$R^1$ und $R^2$ die in Anspruch 1 angegebene Bedeutung besitzen und
Z° eine Einfachbindung, $-CH_2CH_2-$,

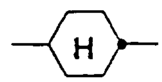 oder

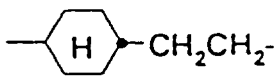

bedeutet, enthält.

12. Anzeige nach mindestens einem der Ansprüche 1 bis 11, dadurch gekennzeichnet, daß die Flüssigkristallmischung gegebenenfalls eine oder mehrere Verbindungen, ausgewählt aus der Gruppe V und VI:

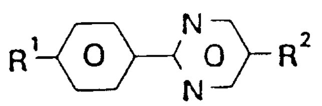

V

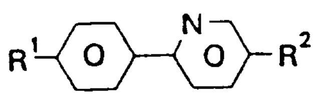

VI

worin $R^1$ und $R^2$ die in Anspruch 1 angegebene Bedeutung besitzen, enthält.

13. Anzeige nach mindestens einem der Ansprüche 1 bis 12, dadurch gekennzeichnet, daß die Flüssigkristallmischung gegebenenfalls eine oder mehrere Verbindungen, ausgewählt aus der Gruppe VII bis XIII:

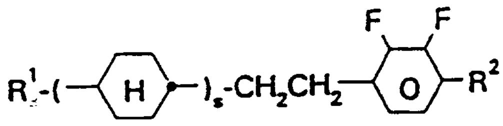

VII

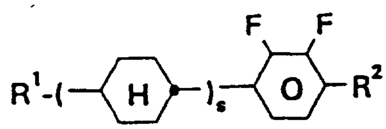

VIII

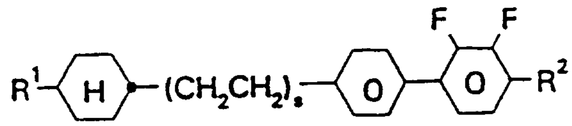

IX

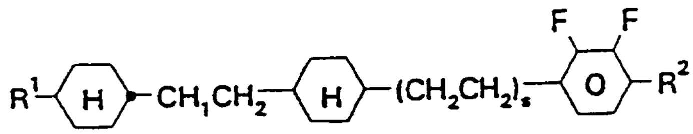

X

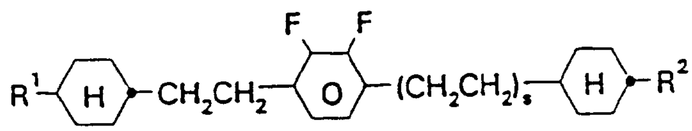

XI

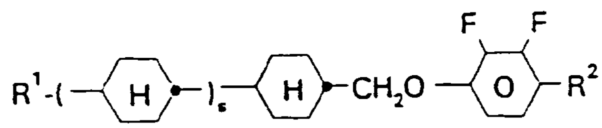

XII

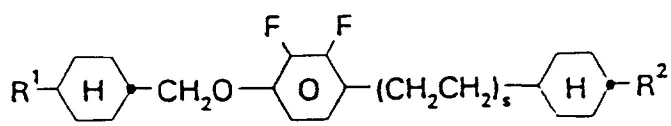

XIII

worin

| | |
|---|---|
| $R^1$ und $R^2$ | die in Anspruch 1 angegebene Bedeutung besitzen und |
| s | 0 oder 1 bedeutet, enthält. |

**14.** Anzeige nach mindestens einem der Ansprüche 1 bis 13, dadurch gekennzeichnet, daß der an X gebundene Ring, d.h. $A^2$ in IIa und IIb und $A^3$ in IIc bis IIf 1,4-Phenylen bedeutet, das gegebenenfalls durch Fluor einfach oder zweifach substituiert sein kann.

**15.** Anzeige nach Anspruch 14, dadurch gekennzeichnet, daß $A^2$-X und $A^3$-X vorzugsweise eine Gruppe, ausgewählt aus den Formeln (a) bis (i):

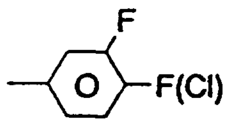

(a)

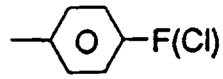

(b)

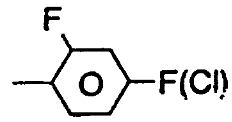

(c)

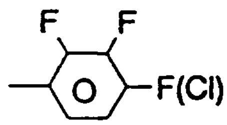

(d)

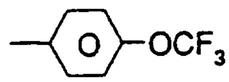

(e)

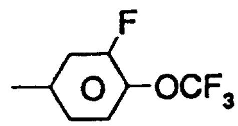

(f)

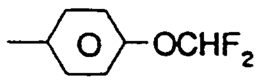

(g)

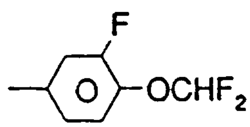

(h)

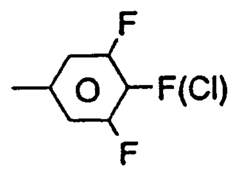

(i)

bedeuten, von denen (a), (b), (d), (e), (g), (h) und (i) besonders bevorzugt sind.

**16.** Anzeige nach Anspruch 14 oder 15, dadurch gekennzeichnet, daß die Verbindungen der Formeln IIa bis IIf aus folgenden Formeln:

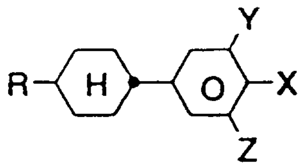

IIa1

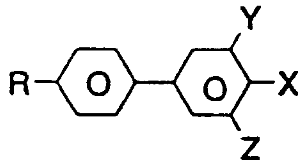

IIa2

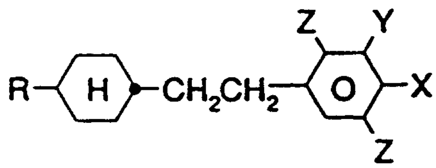

IIb1

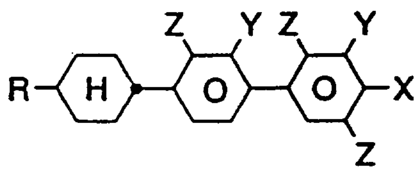

IIc1

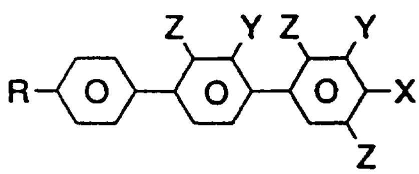

IIc2

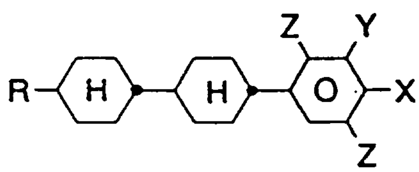

IIc3

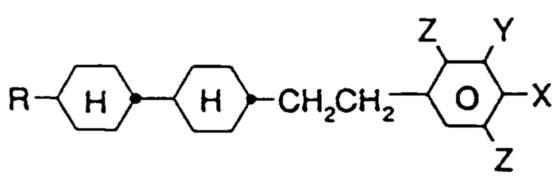

IId1

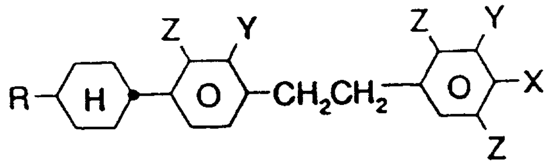

IId2

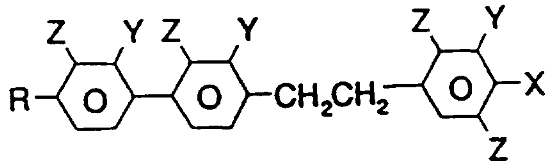

IId3

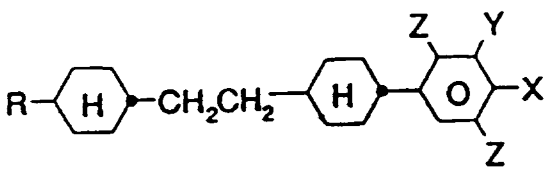

IIf1

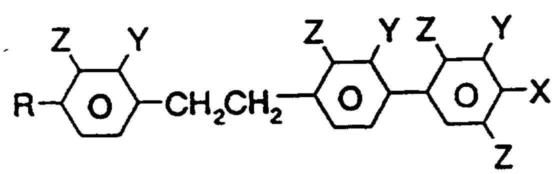

IIf2

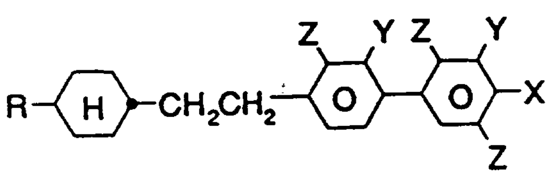

IIf3

worin R jeweils n-Alkyl oder n-Alkenyl mit bis zu 9 Kohlenstoffatomen, Y und Z jeweils unabhängig voneinander H oder F, einer oder zwei der Reste Y und Z Fluor, und X F, Cl, $-CF_3$, $-OCF_3$ oder $-OCHF_2$ bedeuten, ausgewählt sind.

**17.** Flüssigkristallmischung der nach einem der Ansprüche 1 bis 16 definierten Zusammensetzung.

## Revendications

**1.** Afficheur à matrice de cristaux liquides contenant:

- deux plaques support planes parallèles qui conjointement avec un cadre forment une cellule,
- des éléments non linéaires intégrés pour commuter des éléments d'image individuelle sur les plaques support, et
- un mélange de cristaux liquides nématiques qui est présent dans la cellule, possède une anisotropie diélectrique positive, une résistivité spécifique élevée, une plage de phase nématique d'au moins 60 °C, une viscosité maximale à 20 °C de 30 mPa.s et une constante diélectrique moyenne $\bar{\epsilon} \leqq 8$,

et qui comprend

a) au moins 10% en poids d'un composant B cristallin liquide comprenant un ou plusieurs composés ayant une anisotropie diélectrique supérieure à +1,5, choisis parmi les composés de formule IIa à IIf:

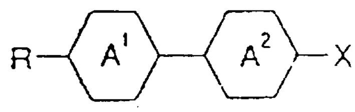

IIa

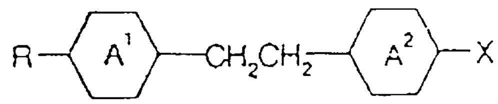

IIb

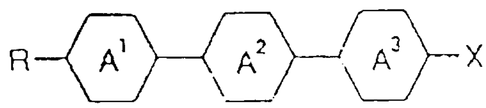

IIc

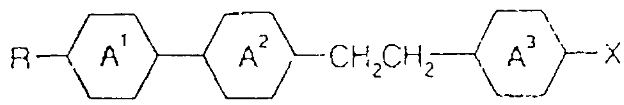

IId

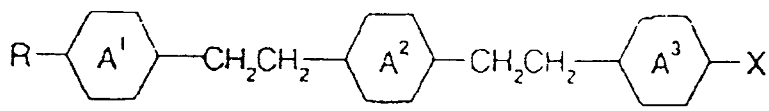

IIe

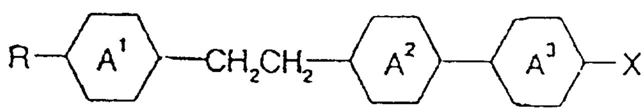

IIf

dans lesquelles

| | |
|---|---|
| R | est un groupe n-alkyle ou n-alcényle ayant jusqu'à 9 atomes de carbone, |
| X | est un groupe cyano, -NCS, F, Cl, $-CHF_2$, - $OCF_3$, $-OCHF_2$, $-OCF_2CF_2H$ ou $-OC_2F_5$, et |
| les noyaux $A^1$, $A^2$ et $A^3$ | sont chacun, indépendamment l'un de l'autre, un groupe 1,4-phénylène, 2- ou 3-fluoro-1,4-phénylène, 2,3-difluoro-1,4-phénylène, 2,6-difluoro-1,4-phénylène, trans-1,4-cyclohexylène ou 1,4-cyclohexénylène, |

b) jusqu'à 90% en poids d'un composant A cristallin liquide comprenant un ou plusieurs composés ayant une anisotropie diélectrique de -1,5 à +1,5 de formule générale 1

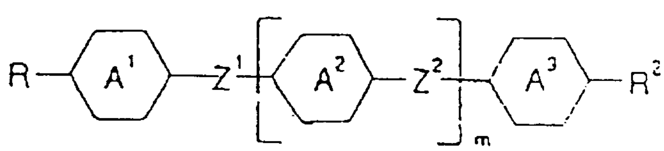

I

dans laquelle

$R^1$ et $R^2$ sont chacun, indépendamment l'un de l'autre, un groupe n-alkyle, fluoroalkyle ou n-alcényle ayant jusqu'à 9 atomes de carbone,

les noyaux $A^1$, $A^2$ et $A^3$ sont chacun, indépendamment l'un de l'autre, un groupe 1,4-phénylène, 2- ou 3-fluoro-1,4-phénylène, trans-1,4-cyclohexylène ou 1,4-cyclohexénylène,

$Z^1$ et $Z^2$ sont chacun, indépendamment l'un de l'autre, un groupe $-CH_2CH_2$ ou une liaison simple, et

m vaut 0, 1 ou 2, et $A^2$ et $Z^2$ sont chacun identiques ou différents si m = 2, et

c) 0 à 20% en poids d'un composant C cristallin liquide comprenant un ou plusieurs composés ayant une anisotropie diélectrique inférieure à -1,5,

caractérisé en ce que le mélange de cristaux liquides comprend un ou plusieurs composés choisis

parmi les composés de formules 1a à 1g:

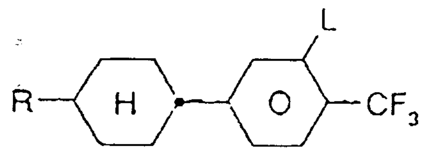

1a

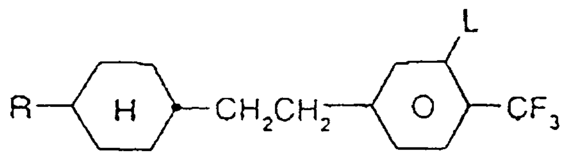

1b

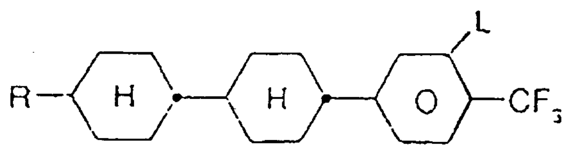

1c

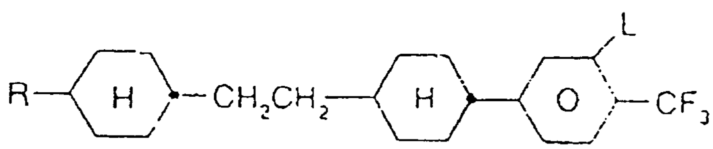

1d

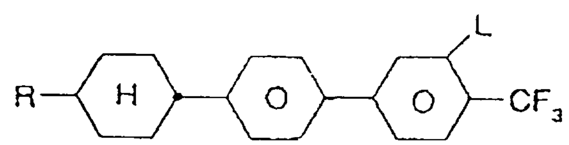

1e

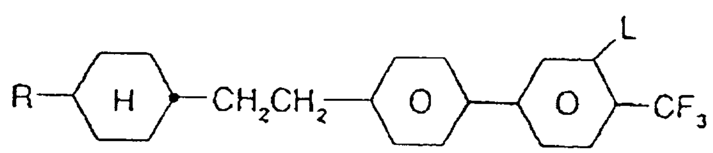

1f

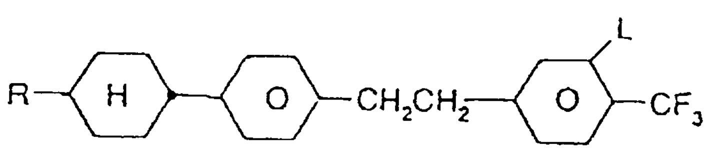

1g

dans lesquelles R représente un groupe n-alkyle, n-oxaalkyle ou n-alcényle ayant jusqu'à 9 atomes de carbone, et L est un atome H ou F, de préférence H.

**2.** Afficheur selon la revendication 1, caractérisé en ce que le composant B se compose essentiellement d'un ou plusieurs composés choisis parmi les composés de formules 1a à 1g et des composés contenant un nitrile de formule IIa à IIf, dans lesquelles X est CN.

**3.** Afficheur selon la revendication 2, caractérisé en ce que le composant B contient des composés des formules IIa à IIf dans lesquelles X est -NCS, F, Cl, $-CHF_2$, $-OCF_3$, $-OCHF_2$, $-OCF_2CF_2H$ ou $-OC_2F_5$ et la quantité de composés cyano dans le composant B est de 0 à 50% en poids.

**4.** Afficheur selon la revendication 3, caractérisé en ce que le composant B ne contient aucun composé des formules IIa à IIf dans lesquelles X est un groupe cyano.

**5.** Afficheur selon au moins une des revendications 1 à 4, caractérisé en ce que X est un radical F, Cl, $-OCF_3$, $-OCHF_2$ ou $-CHF_2$.

**6.** Afficheur selon au moins une des revendications 1 à 5, caractérisé en ce que le composant A contient un ou plusieurs composés choisis parmi les composés de formule II1 à II7:

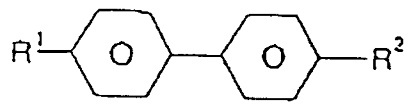

II1

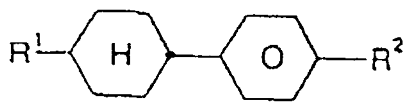

II2

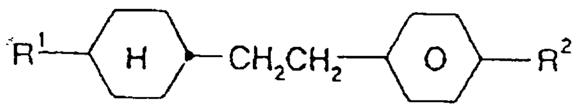

II3

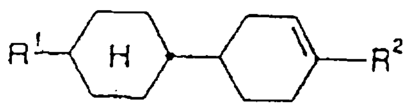

II4

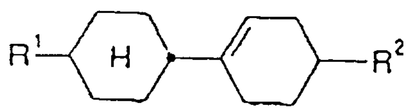

II5

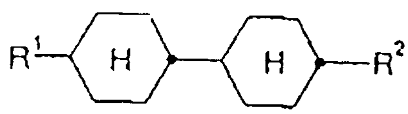

II6

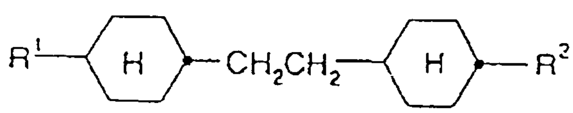

II7

dans lesquelles $R^1$ et $R^2$ possèdent la signification donnée dans la revendication 1.

**7.** Afficheur selon la revendication 6, caractérisé en ce que le composant A contient un ou plusieurs composés choisis parmi les composés de formules II8 à II20:

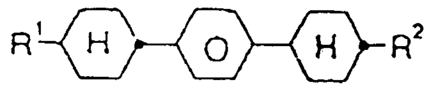

II8

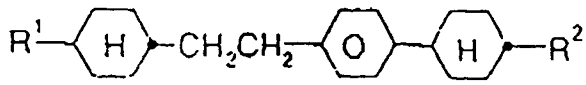

II9

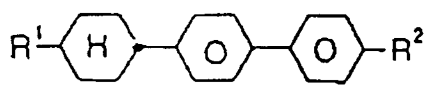

II10

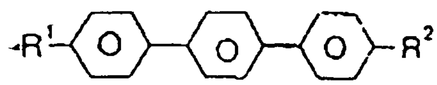

II11

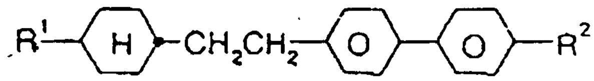

II12

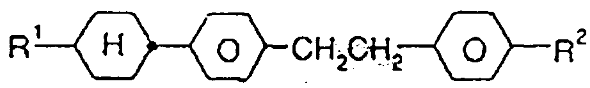

II13

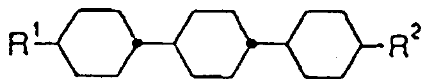

II14

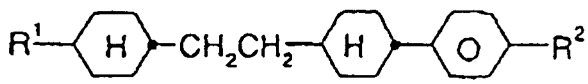

II15

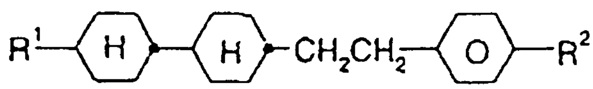

II16

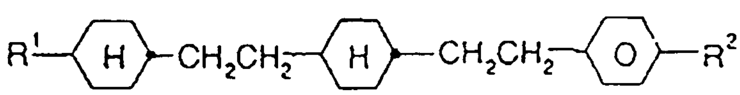

II17

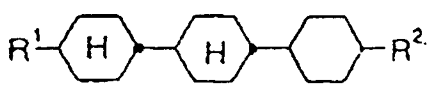

II18

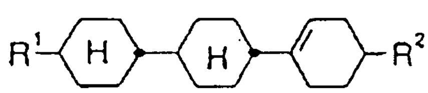

II19

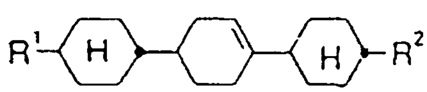

II20

dans lesquelles $R^1$ et $R^2$ possèdent la signification donnée dans la revendication 1, et les groupes 1,4-phénylène dans II8 à II17 peuvent chacun, indépendamment l'un de l'autre, être également mono- ou polysubstitués par du fluor.

**8.** Afficheur selon la revendication 6 ou 7, caractérisé en ce que le composant A contient un ou plusieurs composés choisis parmi les composés de formules II21 à II25:

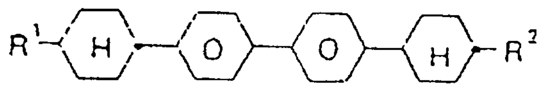

II21

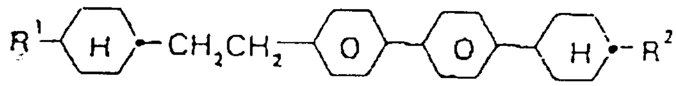

II22

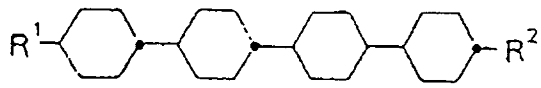

II23

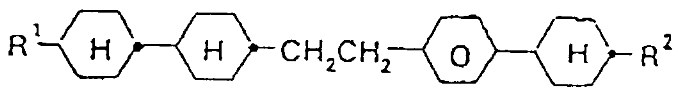

II24

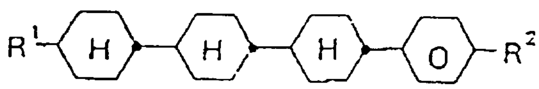

II25

dans lesquelles $R^1$ et $R^2$ possèdent la signification donnée dans la revendication 1, et les groupes 1,4-phénylène dans II21 à II25 peuvent chacun, indépendamment l'un de l'autre, être mono- ou polysubstitués par du fluor.

**9.** Afficheur selon au moins une des revendications 1 à 8, caractérisé en ce que le composant A contient un ou plusieurs composés choisis parmi les composés de formules II26 et II27:

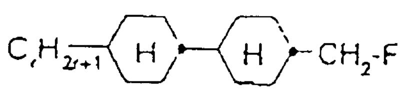

II26

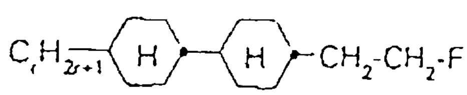

II27

dans lesquelles $C_rH_{z+1}$ est un groupe alkyle à chaîne droite ayant jusqu'à 7 atomes de carbone.

**10.** Afficheur selon au moins une des revendications 1 à 9, caractérisé en ce que le mélange de cristaux liquides contient éventuellement un ou plusieurs composés choisis parmi les composés de formules III, IV et IVa:

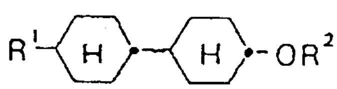

III

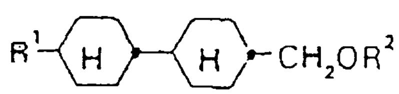

IV

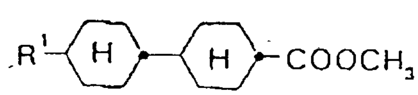

IVa

dans lesquelles $R^1$ et $R^2$ possèdent la signification donnée dans la revendication 2.

**11.** Afficheur selon au moins une des revendications 1 à 10, caractérisé en ce que le mélange de cristaux liquides contient éventuellement un ou plusieurs composés de formule

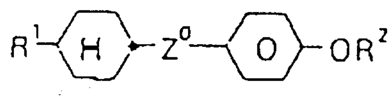

dans laquelle
$R^1$ et $R^2$ possèdent la signification donnée dans la revendication 1, et
$Z^o$ est une liaison simple, $-CH_2CH_2-$,

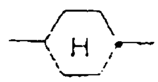 ou 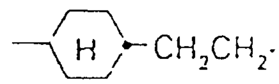

**12.** Afficheur selon au moins une des revendications 1 à 11, caractérisé en ce que le mélange de cristaux liquides contient éventuellement un ou plusieurs composés choisis parmi les composés de formules V et VI:

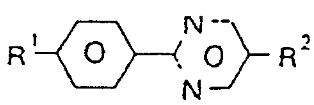 V

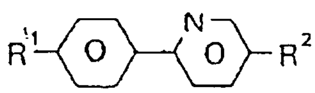 VI

dans lesquelles $R^1$ et $R^2$ possèdent les significations données dans la revendication 1.

**13.** Afficheur selon au moins une des revendications 1 à 12, caractérisé en ce que le mélange de cristaux liquides contient éventuellement un ou plusieurs composés choisis parmi les composés de formules VII à XIII:

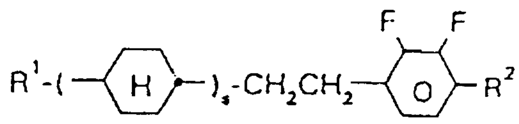

VII

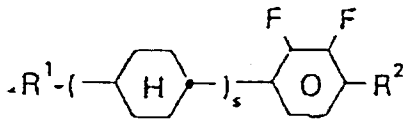

VIII

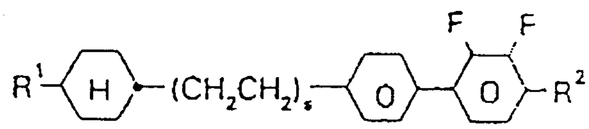

IX

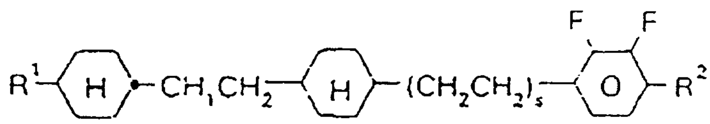

X

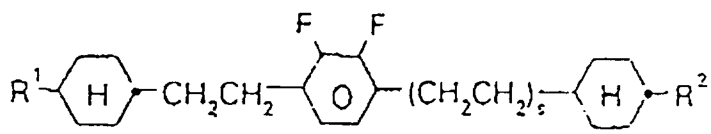

XI

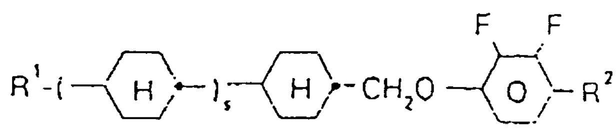

XII

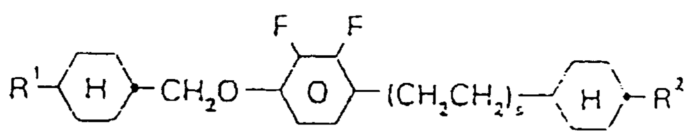

XIII

dans lesquelles
$R^1$ et $R^2$ possèdent la signification donnée dans la revendication 2, et
s vaut 0 ou 1.

**14.** Afficheur selon au moins une des revendications 1 à 13, caractérisé en ce que le cycle lié à X, à savoir, $A^2$ dans IIa et IIb et $A^3$ dans IIc à IIf est un groupe 1,4-phénylène qui est non substitué ou mono- ou disubstitué par du fluor.

**15.** Afficheur selon la revendication 14, caractérisé en ce que $A^2$-X et $A^3$-X sont de préférence un groupe choisi parmi les formules (a) à (i):

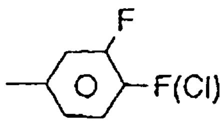
(a)
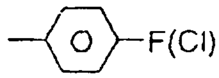
(b)
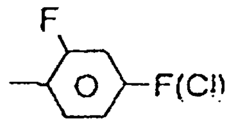
(c)
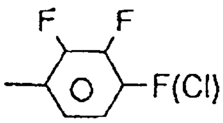
(d)
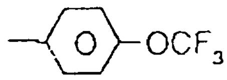
(e)
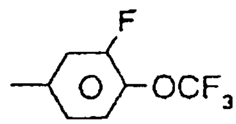
(f)
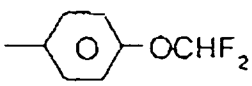
(g)
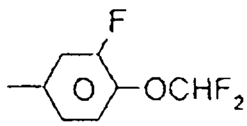
(h)
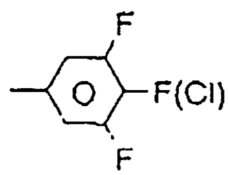
(i)

dont on préfère particulièrement (a), (b), (d), (e), (g), (h) et (i).

**16.** Afficheur selon la revendication 14 ou 15, caractérisé en ce que les composés des formules IIa à IIf sont choisis parmi les composés de formules suivantes:

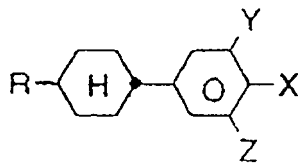

IIa1

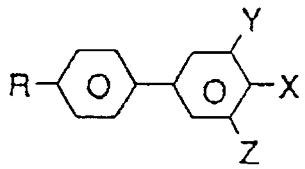

IIa2

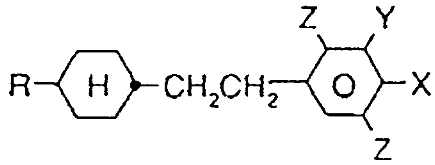

IIb1

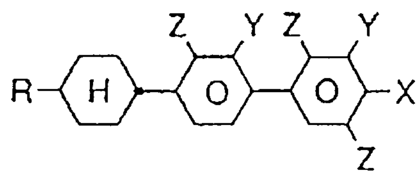

IIc1

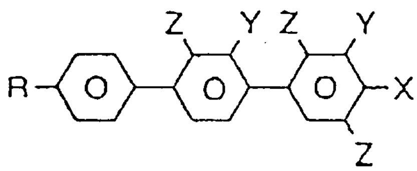

IIc2

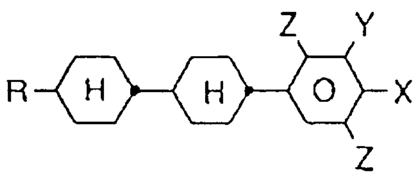

IIc3

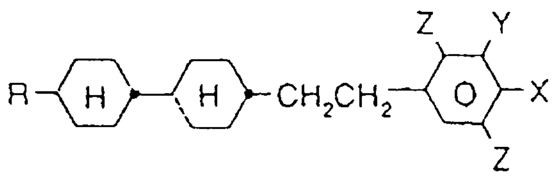

Id1

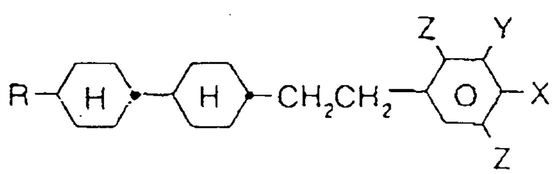

Id1

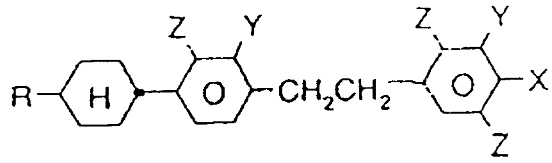

Id2

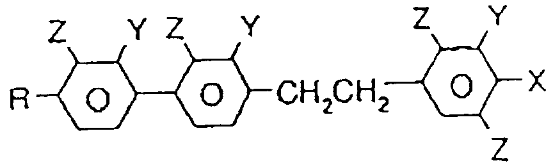

Id3

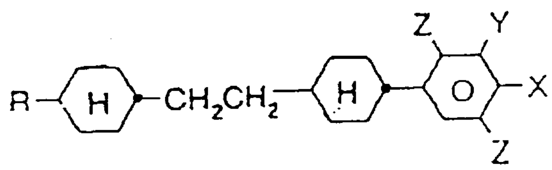

If1

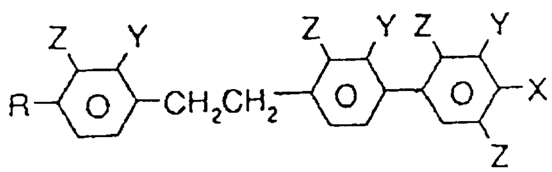

If2

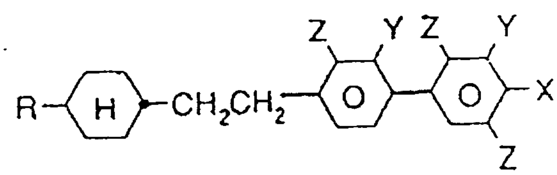

If3

dans lesquelles R est dans chaque cas un groupe n-alkyle ou n-alcényle ayant jusqu'à 9 atomes de carbone, Y et Z sont chacun, indépendamment l'un de l'autre, un atome H ou F, un ou deux des radicaux Y et Z est un atome de fluor, X est F, Cl, $-CF_3$, $-OCF_3$ ou $-OCHF_2$.

**17.** Mélange de cristaux liquides de la composition définie selon l'une quelconque des revendications 1 à 16.